(19) **Europäisches Patentamt / European Patent Office / Office européen des brevets**

(11) **EP 4 304 039 B1**

(12) **EUROPEAN PATENT SPECIFICATION**

(45) Date of publication and mention
of the grant of the patent:
**10.09.2025 Bulletin 2025/37**

(21) Application number: **21932223.7**

(22) Date of filing: **25.03.2021**

(51) International Patent Classification (IPC):
$H02J\ 3/38^{(2006.01)}$ $\qquad$ $H02J\ 3/32^{(2006.01)}$
$H02J\ 3/24^{(2006.01)}$ $\qquad$ $H02J\ 3/46^{(2006.01)}$

(52) Cooperative Patent Classification (CPC):
**H02J 3/32; H02J 3/241; H02J 3/388; H02J 3/46**

(86) International application number:
**PCT/CN2021/083099**

(87) International publication number:
**WO 2022/198598 (29.09.2022 Gazette 2022/39)**

(54) **METHOD FOR SWITCHING GRID-TIED MODE AND OFF-GRID MODE, AND ENERGY STORAGE SYSTEM**

VERFAHREN ZUM UMSCHALTEN EINES NETZGEBUNDENEN MODUS UND EINES NETZFREIEN MODUS UND ENERGIESPEICHERSYSTEM

PROCÉDÉ DE COMMUTATION DE MODE CONNECTÉ AU RÉSEAU ET MODE HORS RÉSEAU, ET SYSTÈME DE STOCKAGE D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.01.2024 Bulletin 2024/02**

(73) Proprietor: **Huawei Digital Power Technologies Co., Ltd.**
**Shenzhen, Guangdong 518043 (CN)**

(72) Inventors:
• **DONG, Mingxuan**
**Shenzhen, Guangdong 518129 (CN)**
• **XIN, Kai**
**Shenzhen, Guangdong 518129 (CN)**

(74) Representative: **Maiwald GmbH**
**Engineering**
**Elisenhof**
**Elisenstrasse 3**
**80335 München (DE)**

(56) References cited:
CN-A- 106 058 910 $\qquad$ CN-A- 106 058 910
CN-A- 109 638 895 $\qquad$ CN-A- 110 021 963
CN-A- 110 224 439 $\qquad$ US-A1- 2016 308 465
US-A1- 2016 308 465 $\qquad$ US-B2- 8 068 352

• ZENG LIU, JINJUN LIU: "A Control Method for 3-Phase Inverters Enabling Smooth Transferring of the Operation Modes of Distributed Generation System", TRANSACTIONS OF CHINA ELECTROTECHNICAL SOCIETY, vol. 26, no. 5, 1 May 2011 (2011-05-01), pages 52 - 61, XP055969485, ISSN: 1000-6753, DOI: 10.19595/j.cnki.1000-6753.tces.2011.05.009

## Description

### TECHNICAL FIELD

This application relates to the field of energy storage technologies, and in particular, to an on-grid/off-grid mode switching method and an energy storage system.

### BACKGROUND

With rapid development of the new energy industry, an energy storage system may be used to store electricity generated through wind power generation or photovoltaic power generation, to avoid waste of wind power and photovoltaic power. When the energy storage system is disconnected from a power grid in a planned or unplanned case, the energy storage system may switch from an on-grid mode to an off-grid mode to supply power to a load in the power grid of the energy storage system.

Currently, during the switching, an inverter takes a long time to control an output voltage, a mechanical delay occurs when an on-grid/off-grid mode switch is turned off, a transmission delay occurs when a status of the on-grid/off-grid mode switch is fed back, and so on. As a result, the switching takes a long time, and voltage distortion or frequency distortion may occur during the switching, affecting power supply to the load.

CN 106 058 910 A describes an energy storage inverter dual-mode seamless intelligent switching system.

### SUMMARY

Embodiments of this application disclose an on-grid/off-grid mode switching method and an energy storage system, to freeze an output frequency of an inverter, so that a frequency distortion event can be avoided. In addition, an output voltage is controlled by controlling an output current, so that a voltage distortion event can be avoided. Compared with directly controlling the output voltage, this improves control efficiency of the inverter. After receiving a switching instruction sent by a controller and determining that an output voltage of the inverter meets a preset range of a rated voltage, the inverter switches to a voltage source mode, to implement on-grid/off-grid mode switching. This improves operation stability of a load.

According to a first aspect, an embodiment of this application discloses an energy storage system. The energy storage system includes a controller, an inverter and an on-grid/off-grid mode switch that are connected to the controller, and a load connected to the on-grid/off-grid mode switch.

In response to determining that the energy storage system is in an islanding state, the inverter sends an islanding state message to the controller, freezes an output frequency of the inverter based on a preset frequency, and controls an output current of the inverter based on an association relationship that an output voltage of the inverter is negatively correlated with apparent power of the inverter, so that the output voltage of the inverter meets a preset range of a rated voltage.

The controller is configured to: send a disconnection instruction to the on-grid/off-grid mode switch based on the islanding state message, where the disconnection instruction instructs the on-grid/off-grid mode switch to disconnect from a power grid corresponding to the on-grid/off-grid mode switch; and send a switching instruction to the inverter in response to receiving a disconnection complete message from the on-grid/off-grid mode switch, where the disconnection complete message indicates that the on-grid/off-grid mode switch has been disconnected from the power grid, and the switching instruction instructs the inverter to switch to a voltage source mode.

The inverter is further configured to switch to the voltage source mode in response to receiving the switching instruction and determining that the output voltage of the inverter meets the preset range of the rated voltage.

It can be understood that, after determining that the energy storage system is in the islanding state, the inverter freezes the output frequency of the inverter based on the preset frequency, so that a frequency distortion event can be avoided. In addition, the output voltage is controlled by controlling the output current, so that a voltage distortion event can be avoided. Compared with directly controlling the output voltage, this improves control efficiency of the inverter. After receiving the switching instruction sent by the controller and determining that the output voltage of the inverter meets the preset range of the rated voltage, the inverter switches to the voltage source mode, to implement on-grid/off-grid mode switching. This improves operation stability of the load.

In a possible example, the inverter is specifically configured to: control the output current of the inverter based on a first association relationship that the output voltage of the inverter is negatively correlated with the apparent power of the inverter, to obtain a first stable output voltage of the inverter and first apparent power corresponding to the first stable output voltage, where a variation range of the first stable output voltage is less than or equal to the preset range; adjust the first association relationship based on a second association relationship that the output voltage of the inverter is positively correlated with apparent power of the load, and a magnitude relationship between the first stable output voltage and the rated voltage, to obtain a third association relationship that the output voltage of the inverter is negatively correlated with the apparent power of the inverter; and control the output current of the inverter based on the third association relationship and the rated voltage, so that the output voltage of the inverter meets the preset range of the rated voltage. In this way, the first association relationship between the output voltage of the inverter and the apparent power of the inverter is adjusted based on the second association relationship between the output voltage of the inverter and the apparent power of the load, to obtain the third association relationship, and then the output current of the inverter is controlled based on the third association relationship and the rated voltage. This can improve control efficiency and accuracy, and further improve operation stability of the load.

In a possible example, the inverter is specifically configured to: adjust the first association relationship based on a magnitude relationship between the first stable output voltage and the rated voltage, to obtain a fourth association relationship that the output voltage of the inverter is negatively correlated with the apparent power of the inverter; control the output current of the inverter based on the fourth association relationship, to obtain a second stable output voltage of the inverter and second apparent power corresponding to the second stable output voltage, where a variation range of the second stable output voltage is less than or equal to the preset range; obtain, based on the first stable output voltage, the first apparent power, the second stable output voltage, and the second apparent power, the second association relationship that the output voltage of the inverter is positively correlated with the apparent power of the load; and adjust the fourth association relationship based on the second association relationship and the magnitude relationship between the first stable output voltage and the rated voltage, to obtain the third association relationship that the output voltage of the inverter is negatively correlated with the apparent power of the inverter.

It can be understood that the output current of the inverter is controlled based on the fourth association relationship that is obtained by adjusting the first association relationship based on the magnitude relationship between the first stable output voltage and the rated voltage, to obtain the second stable output voltage, so that the second stable output voltage closer to the rated voltage than first stable output voltage can be obtained. This helps improve efficiency of controlling the output voltage. Then the second association relationship is obtained based on the first stable output voltage, the first apparent power, the second stable output voltage, and the second apparent power, so that accuracy of obtaining the second association relationship can be improved. Then the fourth association relationship is adjusted based on the second association relationship and the magnitude relationship between the first stable output voltage and the rated voltage, to obtain the third association relationship, so that efficiency of controlling the output voltage can be improved.

In a possible example, the inverter is further configured to obtain the first association relationship based on a minimum output voltage and a maximum output voltage of the inverter within the preset range of the rated voltage, maximum apparent power corresponding to the minimum output voltage, and minimum apparent power corresponding to the maximum output voltage. It can be understood that the output voltage and the apparent power of the inverter are in a negative correlation relationship, so that the first association relationship can be obtained based on the minimum output voltage of the inverter within the preset range of the rated voltage, the maximum apparent power corresponding to the minimum output voltage, the maximum output voltage within the preset range of the rated voltage, and the minimum apparent power corresponding to the maximum output voltage. This improves accuracy of obtaining the first association relationship.

In a possible example, the first association relationship includes a first formula:

$$S_1(U_i) = \frac{P_N}{U_L - U_H} U_i - \frac{P_N}{U_L - U_H} U_H$$

$P_N$ is rated power of the inverter, $U_L$ is the minimum output voltage, $U_H$ is the maximum output voltage, $U_i$ is the output voltage of the inverter, and $S_1(U_i)$ is apparent power of the inverter when the output voltage of the inverter is $U_i$. In this way, the first association relationship is described by using the first formula, so that accuracy of obtaining the first association relationship can be improved.

In a possible example, the fourth association relationship indicates that when the first stable output voltage is less than the rated voltage, maximum apparent power corresponding to the inverter within the preset range of the rated voltage in the fourth association relationship is greater than maximum apparent power corresponding to the inverter within the preset range of the rated voltage in the first association relationship; or when the first stable output voltage is greater than or equal to the rated voltage, maximum apparent power corresponding to the inverter within the preset range of the rated voltage in the fourth association relationship is less than maximum apparent power corresponding to the inverter within the preset range of the rated voltage in the first association relationship. In this way, compared with the first stable output voltage, the second stable output voltage obtained through control based on the fourth association relationship is closer to the rated voltage. This helps improve efficiency of controlling the output voltage.

In a possible example, the fourth association relationship includes a second formula:

$$S_1{}^*(U_i)$$

$$= \begin{cases} \dfrac{P_N}{U_L - [U_H + k_1(U_N - U_1)]}U_i - \dfrac{P_N}{U_L - [U_H + k_1(U_N - U_1)]}[U_H + k_1(U_N - U_1)], U_i < U_N \\[4mm] \dfrac{P_N\left(1 + \dfrac{U_N - U_1}{U_N}k_2\right)}{U_L - U_H}U_i - \dfrac{P_N\left(1 + \dfrac{U_N - U_1}{U_N}k_2\right)}{U_L - U_H}U_H, U_i \geq U_N \end{cases}$$

$P_N$ is rated power of the inverter, $U_L$ is a minimum output voltage of the inverter within the preset range of the rated voltage, $U_H$ is a maximum output voltage of the inverter within the preset range of the rated voltage, $U_i$ is the output voltage of the inverter, $S_1{}^*(U_i)$ is apparent power of the inverter when the output voltage of the inverter is $U_i$, $U_1$ is the first stable output voltage, $U_N$ is the rated voltage, $k_1$ is an association coefficient used when the first stable output voltage is less than the rated voltage, and $k_2$ is an association coefficient used when the first stable output voltage is greater than or equal to the rated voltage. In this way, the fourth association relationship is described by using the second formula, so that accuracy of obtaining the fourth association relationship can be improved. This helps improve efficiency of controlling the output voltage.

In a possible example, the second association relationship includes a third formula:

$$S_2(U_i) = \frac{S_1{}^*(U_2) - S_1(U_1)}{U_2 - U_1}U_i + \frac{S_1{}^*(U_2) - S_1(U_1)}{U_2 - U_1}U_1 - S_1(U_i)$$

$U_i$ is the output voltage of the inverter, $U_1$ is the first stable output voltage, $U_2$ is the second stable output voltage, $S_1(U_1)$ is the first apparent power, $S_1{}^*(U_2)$ is the second apparent power, $S_1(U_i)$ is apparent power of the inverter when the output voltage of the inverter is $U_i$, and $S_2(U_i)$ is apparent power of the load when the output voltage of the inverter is $U_i$. In this way, the second association relationship is described by using the third formula, so that accuracy of obtaining the second association relationship can be improved. This helps improve efficiency of controlling the output voltage.

In a possible example, the inverter is specifically configured to: determine a value of the association coefficient in the fourth association relationship based on the second association relationship and the magnitude relationship between the first stable output voltage and the rated voltage; and update the fourth association relationship based on the value of the association coefficient, to obtain the third association relationship that the output voltage of the inverter is negatively correlated with the apparent power of the inverter. It can be understood that the correlation coefficient in the fourth association relationship is updated based on the second association relationship and the magnitude relationship between the first stable output voltage and the rated voltage, so that accuracy of obtaining the third association relationship can be improved. This helps improve efficiency of controlling the output voltage.

In a possible example, a calculation formula for the value k of the correlation coefficient includes a fourth formula:

$$k = \begin{cases} \dfrac{(U_N - U_H)P_N - (U_L - U_H)S_2(U_N)}{(U_N - U_1)[P_N - S_2(U_N)]}, U_i < U_N \\[4mm] \dfrac{[(U_N - U_H)P_N - (U_L - U_H)S_2(U_N)](U_N)}{(U_N - U_H)(U_1 - U_H)P_N}, U_i \geq U_N \end{cases}$$

$P_N$ is rated power of the inverter, $U_L$ is a minimum output voltage of the inverter within the preset range of the rated voltage, $U_H$ is a maximum output voltage of the inverter within the preset range of the rated voltage, $U_1$ is the first stable output voltage, and $S_2(U_i)$ is apparent power of the load when the output voltage of the inverter is $U_N$. In this way, the value of the association coefficient in the fourth association relationship is obtained based on the fourth formula, so that accuracy of updating the fourth association relationship can be improved. This helps improve efficiency of controlling the output voltage.

In a possible example, the inverter is specifically configured to: obtain, based on the third association relationship, target apparent power corresponding to the rated voltage; and control the output current of the inverter based on the target apparent power, so that the output voltage of the inverter meets the preset range of the rated voltage.

It can be understood that the third association relationship describes an association relationship between the output voltage and the apparent power of the inverter, so that the target apparent power corresponding to the rated voltage can be obtained based on the third association relationship. In addition, the apparent power is related to the output voltage and the output current, so that a current output current of the inverter can be tracked based on the target apparent power, to obtain a drive signal corresponding to the rated voltage. Then the inverter is controlled to operate based on the drive signal, so that the output voltage of the inverter is controlled, to make the output voltage of the inverter meet the preset range of the rated voltage. This improves control efficiency and operation stability of the inverter, and therefore improves operation stability of the load.

In a possible example, the inverter is specifically configured to: in response to that an operation mode is a current source mode, determine, based on the output voltage of the inverter, whether the energy storage system is in the islanding state. In this way, whether the energy storage system is in the islanding state is determined based on the output voltage of the inverter, so that efficiency and accuracy of determining the islanding state can be improved.

According to a second aspect, an embodiment of this application discloses an on-grid/off-grid mode switching method, applied to an energy storage system, where the energy storage system includes a controller, an inverter, an on-grid/off-grid mode switch, and a load.

In response to determining that the energy storage system is in an islanding state, the inverter sends an islanding state message to the controller, freezes an output frequency of the inverter based on a preset frequency, and controls an output current of the inverter based on an association relationship that an output voltage of the inverter is negatively correlated with apparent power of the inverter, so that the output voltage of the inverter meets a preset range of a rated voltage.

The controller sends a disconnection instruction to the on-grid/off-grid mode switch, where the disconnection instruction instructs the on-grid/off-grid mode switch to disconnect from the power grid.

The controller sends a switching instruction to the inverter in response to receiving a disconnection complete message from the on-grid/off-grid mode switch, where the disconnection complete message indicates that the on-grid/off-grid mode switch has been disconnected from the power grid, and the switching instruction instructs the inverter to switch to a voltage source mode.

The inverter switches to the voltage source mode in response to receiving the switching instruction and determining that the output voltage of the inverter meets the preset range of the rated voltage.

It can be understood that, after determining that the energy storage system is in the islanding state, the inverter freezes the output frequency of the inverter based on the preset frequency, so that a frequency distortion event can be avoided. In addition, the output voltage is controlled by controlling the output current, so that a voltage distortion event can be avoided. Compared with directly controlling the output voltage, this improves control efficiency of the inverter. After receiving the switching instruction sent by the controller and determining that the output voltage of the inverter meets the preset range of the rated voltage, the inverter switches to the voltage source mode, to implement on-grid/off-grid mode switching. This improves operation stability of the load.

In a possible example, the controlling an output current of the inverter based on an association relationship that an output voltage of the inverter is negatively correlated with apparent power of the inverter includes:

The inverter controls the output current of the inverter based on a first association relationship that the output voltage of the inverter is negatively correlated with the apparent power of the inverter, to obtain a first stable output voltage of the inverter and first apparent power corresponding to the first stable output voltage, where a variation range of the first stable output voltage is less than or equal to the preset range.

In a possible example, the method further includes:

The inverter adjusts the first association relationship based on a second association relationship that the output voltage of the inverter is positively correlated with apparent power of the load, and a magnitude relationship between the first stable output voltage and the rated voltage, to obtain a third association relationship that the output voltage of the inverter is negatively correlated with the apparent power of the inverter; and
the inverter controls the output current of the inverter based on the third association relationship and the rated voltage, so that the output voltage of the inverter meets the preset range of the rated voltage.

In this way, the first association relationship between the output voltage of the inverter and the apparent power of the inverter is adjusted based on the second association relationship between the output voltage of the inverter and the apparent power of the load, to obtain the third association relationship, and then the output current of the inverter is controlled based on the third association relationship and the rated voltage. This can improve control efficiency and accuracy, and further improve operation stability of the load.

In a possible example, the adjusting the first association relationship based on a second association relationship that the output voltage of the inverter is positively correlated with apparent power of the load, and a magnitude relationship between the first stable output voltage and the rated voltage, to obtain a third association relationship that the output voltage of the inverter is negatively correlated with the apparent power of the inverter includes:

The inverter adjusts the first association relationship based on a magnitude relationship between the first stable output voltage and the rated voltage, to obtain a fourth association relationship that the output voltage of the inverter is negatively correlated with the apparent power of the inverter; and
the inverter controls the output current of the inverter based on the fourth association relationship, to obtain a second stable output voltage of the inverter and second apparent power corresponding to the second stable output voltage, where a variation range of the second stable output voltage is less than or equal to the preset range.

It can be understood that the output current of the inverter is controlled based on the fourth association relationship that is obtained by adjusting the first association relationship based on the magnitude relationship between the first stable output voltage and the rated voltage, to obtain the second stable output voltage, so that the second stable output voltage closer to the rated voltage than the first stable output voltage can be obtained. This helps improve efficiency of controlling the output voltage.

In a possible example, the method further includes:

The inverter obtains, based on the first stable output voltage, the first apparent power, the second stable output voltage, and the second apparent power, the second association relationship that the output voltage of the inverter is positively correlated with the apparent power of the load; and

the inverter adjusts the fourth association relationship based on the second association relationship and the magnitude relationship between the first stable output voltage and the rated voltage, to obtain the third association relationship that the output voltage of the inverter is negatively correlated with the apparent power of the inverter.

It can be understood that the second association relationship is obtained based on the first stable output voltage, the first apparent power, the second stable output voltage, and the second apparent power, so that accuracy of obtaining the second association relationship can be improved. Then the fourth association relationship is adjusted based on the second association relationship and the magnitude relationship between the first stable output voltage and the rated voltage, to obtain the third association relationship, so that efficiency of controlling the output voltage can be improved.

In a possible example, before the controlling the output current of the inverter based on a first association relationship that the output voltage of the inverter is negatively correlated with the apparent power of the inverter, the method further includes:

The inverter obtains the first association relationship based on a minimum output voltage and a maximum output voltage of the inverter within the preset range of the rated voltage, maximum apparent power corresponding to the minimum output voltage, and minimum apparent power corresponding to the maximum output voltage.

It can be understood that the output voltage and the apparent power of the inverter are in a negative correlation relationship, so that the first association relationship can be obtained based on the minimum output voltage of the inverter within the preset range of the rated voltage, the maximum apparent power corresponding to the minimum output voltage, the maximum output voltage within the preset range of the rated voltage, and the minimum apparent power corresponding to the maximum output voltage. This improves accuracy of obtaining the first association relationship.

In a possible example, the first association relationship includes a first formula:

$$S_1(U_i) = \frac{P_N}{U_L - U_H} U_i - \frac{P_N}{U_L - U_H} U_H$$

$P_N$ is rated power of the inverter, $U_L$ is the minimum output voltage, $U_H$ is the maximum output voltage, $U_i$ is the output voltage of the inverter, and $S_1(U_i)$ is apparent power of the inverter when the output voltage of the inverter is $U_i$. In this way, the first association relationship is described by using the first formula, so that accuracy of obtaining the first association relationship can be improved.

In a possible example, the fourth association relationship indicates that when the first stable output voltage is less than the rated voltage, maximum apparent power corresponding to the inverter within the preset range of the rated voltage in the fourth association relationship is greater than maximum apparent power corresponding to the inverter within the preset range of the rated voltage in the first association relationship; or when the first stable output voltage is greater than or equal to the rated voltage, maximum apparent power corresponding to the inverter within the preset range of the rated voltage in the fourth association relationship is less than maximum apparent power corresponding to the inverter within the preset range of the rated voltage in the first association relationship. In this way, compared with the first stable output voltage, the second stable output voltage obtained through control based on the fourth association relationship is closer to the rated voltage. This helps improve efficiency of controlling the output voltage.

In a possible example, the fourth association relationship includes a second formula:

$$S_1^*(U_i)$$
$$= \begin{cases} \dfrac{P_N}{U_L - [U_H + k_1(U_N - U_1)]} U_i - \dfrac{P_N}{U_L - [U_H + k_1(U_N - U_1)]} [U_H + k_1(U_N - U_1)], U_i < U_N \\ \dfrac{P_N\left(1 + \dfrac{U_N - U_1}{U_N} k_2\right)}{U_L - U_H} U_i - \dfrac{P_N\left(1 + \dfrac{U_N - U_1}{U_N} k_2\right)}{U_L - U_H} U_H, U_i \geq U_N \end{cases}$$

$P_N$ is rated power of the inverter, $U_L$ is a minimum output voltage of the inverter within the preset range of the rated voltage, $U_H$ is a maximum output voltage of the inverter within the preset range of the rated voltage, $U_i$ is the output voltage of the inverter, $S_1{}^*(U_i)$ is apparent power of the inverter when the output voltage of the inverter is $U_i$, $U_1$ is the first stable output voltage, $U_N$ is the rated voltage, $k_1$ is an association coefficient used when the first stable output voltage is less than the rated voltage, and $k_2$ is an association coefficient used when the first stable output voltage is greater than or equal to the rated voltage. In this way, the fourth association relationship is described by using the second formula, so that accuracy of obtaining the fourth association relationship can be improved. This helps improve efficiency of controlling the output voltage.

In a possible example, the second association relationship includes a third formula:

$$S_2(U_i) = \frac{S_1{}^*(U_2) - S_1(U_1)}{U_2 - U_1} U_i + \frac{S_1{}^*(U_2) - S_1(U_1)}{U_2 - U_1} U_1 - S_1(U_i)$$

$U_i$ is the output voltage of the inverter, $U_1$ is the first stable output voltage, $U_2$ is the second stable output voltage, $S_1(U_1)$ is the first apparent power, $S_1{}^*(U_2)$ is the second apparent power, $S_1(U_i)$ is apparent power of the inverter when the output voltage of the inverter is $U_i$, and $S_2(U_i)$ is apparent power of the load when the output voltage of the inverter is $U_i$. In this way, the second association relationship is described by using the third formula, so that accuracy of obtaining the second association relationship can be improved. This helps improve efficiency of controlling the output voltage.

In a possible example, the adjusting the fourth association relationship based on the second association relationship and the magnitude relationship between the first stable output voltage and the rated voltage, to obtain the third association relationship that the output voltage of the inverter is negatively correlated with the apparent power of the inverter includes:

The inverter determines a value of the association coefficient in the fourth association relationship based on the second association relationship and the magnitude relationship between the first stable output voltage and the rated voltage; and

the inverter updates the fourth association relationship based on the value of the association coefficient, to obtain the third association relationship.

It can be understood that the correlation coefficient in the fourth association relationship is updated based on the second association relationship and the magnitude relationship between the first stable output voltage and the rated voltage, so that accuracy of obtaining the third association relationship can be improved. This helps improve efficiency of controlling the output voltage.

In a possible example, a calculation formula for the value k of the correlation coefficient includes a fourth formula:

$$k = \begin{cases} \dfrac{(U_N - U_H)P_N - (U_L - U_H)S_2(U_N)}{(U_N - U_1)[P_N - S_2(U_N)]}, U_i < U_N \\ \dfrac{[(U_N - U_H)P_N - (U_L - U_H)S_2(U_N)](U_N)}{(U_N - U_H)(U_1 - U_H)P_N}, U_i \geq U_N \end{cases}$$

$P_N$ is rated power of the inverter, $U_L$ is a minimum output voltage of the inverter within the preset range of the rated voltage, $U_H$ is a maximum output voltage of the inverter within the preset range of the rated voltage, $U_1$ is the first stable output voltage, and $S_2(U_i)$ is apparent power of the load when the output voltage of the inverter is $U_N$. In this way, the value of the association coefficient in the fourth association relationship is obtained based on the fourth formula, so that accuracy of updating the fourth association relationship can be improved. This helps improve efficiency of controlling the output voltage.

In a possible example, the controlling the output current of the inverter based on the third association relationship and the rated voltage includes:

The inverter obtains, based on the third association relationship, target apparent power corresponding to the rated voltage; and

the inverter controls the output current of the inverter based on the target apparent power.

It can be understood that the third association relationship describes an association relationship between the output voltage and the apparent power of the inverter, so that the target apparent power corresponding to the rated voltage can be obtained based on the third association relationship. In addition, the apparent power is related to the output voltage and the output current, so that a current output current of the inverter can be tracked based on the target apparent power, to obtain a drive signal corresponding to the rated voltage. Then the inverter is controlled to operate based on the drive signal, so that the output voltage of the inverter is controlled, to make the output voltage of the inverter meet the preset range of the rated voltage. This improves control efficiency and operation stability of the inverter, and therefore improves operation stability of the load.

In a possible example, the method further includes: In response to that an operation mode is a current source mode, the inverter determines, based on the output voltage of the inverter, whether the energy storage system is in the islanding state. In this way, whether the energy storage system is in the islanding state is determined based on the output voltage of the inverter, so that efficiency and accuracy of determining the islanding state can be improved.

With reference to the first aspect or the second aspect, in a possible example, the preset frequency includes a rated frequency of the load, or an output frequency of the inverter in a case that the energy storage system is in the islanding state.

It can be understood that the rated frequency of the load is a frequency suitable for operation of the load, and the rated frequency of the load is used as the preset frequency for freezing the output frequency of the inverter, so that the output frequency of the inverter is the rated frequency of the load. This improves operation stability of the load. Alternatively, the output frequency of the inverter in a case that the energy storage system is in the islanding state is used as the preset frequency, and the output frequency of the inverter is frozen based on the preset frequency, so that the output frequency of the inverter is the output frequency of the inverter in a case that the energy storage system is in the islanding state, and an input frequency of the load does not change within a short time. This can improve operation stability of the load.

## BRIEF DESCRIPTION OF DRAWINGS

FIG. 1 is a schematic diagram of a structure of an energy storage system according to an embodiment of this application;
FIG. 2 is a schematic diagram of a structure of an inverter according to an embodiment of this application;
FIG. 3 is a schematic diagram of a structure of another energy storage system according to an embodiment of this application;
FIG. 4 is a diagram of a characteristic curve of active power and an output voltage according to an embodiment of this application;
FIG. 5 is a diagram of a characteristic curve of reactive power and an output voltage according to an embodiment of this application;
FIG. 6 is a diagram of a characteristic curve between apparent power and an output voltage according to an embodiment of this application;
FIG. 7 is a diagram of another characteristic curve between apparent power and an output voltage according to an embodiment of this application;
FIG. 8 is a diagram of another characteristic curve between apparent power and an output voltage according to an embodiment of this application;
FIG. 9 is a schematic flowchart of an on-grid/off-grid mode switching method according to an embodiment of this application; and
FIG. 10 is a schematic flowchart of another on-grid/off-grid mode switching method according to an embodiment of this application.

## DESCRIPTION OF EMBODIMENTS

This application provides an energy storage system that integrates functions of charging, power storage, and discharging. Based on an energy storage type, the energy storage system may be included in a wind power generation system, a photovoltaic power generation system, or the like. Based on a scenario type, the energy storage system may be used in a large-scale scenario, a small- or medium-scale distributed scenario, a microgrid, a user-side scenario, or the like. This is not limited herein.

A power grid in this application is also referred to as an electric power grid, and includes various substations and power transmission and distribution lines in a power system, to be specific, includes three units: a power transformation unit, a power transmission unit, and a power distribution unit, configured to transmit and distribute power, change a voltage, and the like. This is not limited herein. The following describes embodiments of this application with reference to accompanying drawings in embodiments of this application.

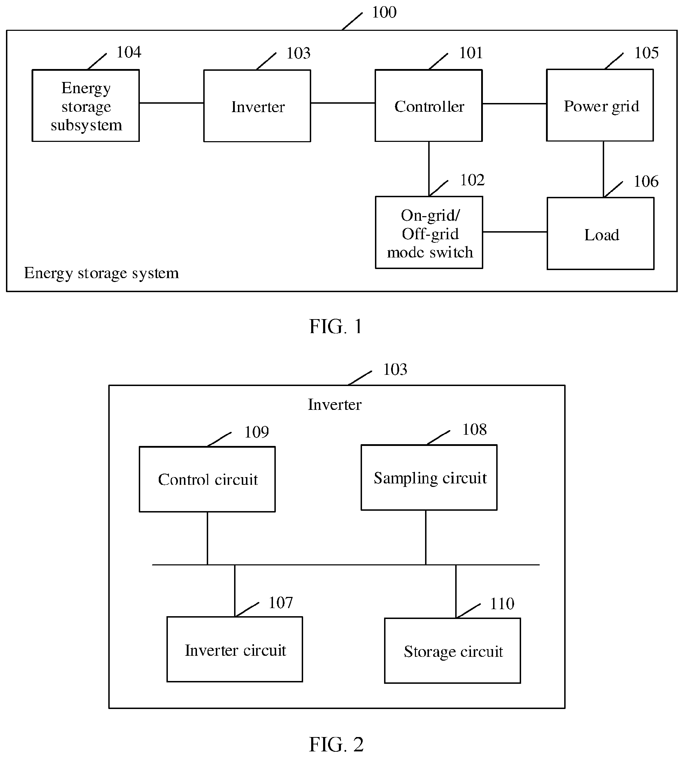

FIG. 1 is a schematic diagram of a structure of an energy storage system according to an embodiment of this application. As shown in FIG. 1, the energy storage system 100 may include a controller 101, an on-grid/off-grid mode switch 102, an inverter 103, an energy storage subsystem 104, a power grid 105, a load 106, and the like. This is not limited herein. The energy storage subsystem 104 may be directly connected to at least one inverter 103, or may be connected to the inverter 103 through direct-current coupling. The inverter 103 and the on-grid/off-grid mode switch 102 may be connected to the controller 101. The controller 101 may be further connected to the power grid 105. At least one load 106 may be connected to the power grid 105.

In this embodiment of this application, the energy storage subsystem 104 may be an energy storage system (ESS), and may include a battery module, a DC/DC converter, and the like. When the ESS is of a photovoltaic energy storage type, the ESS may further include a photovoltaic power generation module and the like. This is not limited herein. Both the battery module and the photovoltaic power generation module may be configured to provide a direct-current voltage on a power generation side of the energy storage system 100. The DC/DC converter may be configured to convert the direct-current voltage on the power generation side into a voltage form required by the inverter 103.

The inverter 103 may include an energy storage inverter (Power Conditioning System, PCS). The PCS may also be referred to as an energy storage converter, an energy conversion system, an energy converter, a grid-tied inverter, a power inverter, or the like. This is not limited herein. The inverter 103 is a converter for converting a received direct-current voltage (for example, a charge transmitted by a battery, a photovoltaic module, or the like) into a constant-frequency and constant-voltage alternating current or a frequency-modulated voltage-modulated alternating current, and is configured to supply power to the power grid 105 or the load 106 connected to the power grid 105. In an on-grid mode, the inverter 103 operates in a current source mode, has an internal impedance characteristic of high impedance, and actively detects a frequency and a phase of a power-grid voltage, to control an output current. In an off-grid mode, the inverter 103 has an internal impedance characteristic of low impedance, operates in a voltage source mode, and actively determines frequency, amplitude, and phase information of an output voltage, to control the output voltage.

FIG. 2 is a schematic diagram of a structure of an inverter according to an embodiment of this application. To be specific, the inverter 103 in FIG. 1 may be implemented by using the structure in FIG. 2. As shown in FIG. 2, the inverter 103 may include an inverter circuit 107, a sampling circuit 108, a control circuit 109, a storage circuit 110, and the like. The inverter circuit 107, the sampling circuit 108, the control circuit 109, and the storage circuit 110 may be connected through a communication bus. The communication bus may be an industry standard architecture (Industry Standard Architecture, ISA) bus, a peripheral component interconnect (PCI) bus, an extended industry standard architecture (Extended Industry Standard Architecture, EISA) bus, or the like. This is not limited herein. The communication bus may be categorized as an address bus, a data bus, a control bus, or the like, for example, a 485 bus.

Functions of the inverter circuit 107, the sampling circuit 108, the control circuit 109, and the storage circuit 110 may be implemented by an integrated circuit. For example, the inverter circuit 107, the sampling circuit 108, the control circuit 109, and the storage circuit 110 are integrated in a printed circuit board (Printed Circuit Board, PCB). The PCB is also referred to as a printed circuit board, is an important electronic component, is a support body for an electronic element, and is a carrier for an electrical connection of the electronic element.

The inverter circuit 107 is configured to implement a main function of the inverter 103, to be specific, convert a direct-current voltage into a constant-frequency and constant-voltage alternating current or a frequency-modulated and voltage-modulated alternating current. The sampling circuit 108 is electrically connected to the inverter circuit 107, and is configured to detect an output voltage and an output current of each inverter circuit 107, or an output voltage and an output current of the entire inverter 103. In specific actual application, the sampling circuit 108 may include a sensor, for example, a current sensor.

The control circuit 109 may be electrically connected to the storage circuit 110. The control circuit 109 is a component capable of coordinating operation of all components according to a function requirement of an instruction; is a nerve center and a command center of the inverter 103; usually includes three components: an instruction register (Instruction Register, IR), a program counter (Program Counter, PC), and an operation controller (Operation Controller, OC); and plays a quite important role in coordinating orderly operation of the entire system. The control circuit 109 herein may be one or more devices, circuits, and/or processing cores for processing data (for example, computer program instructions).

In another embodiment, the control circuit 109 may be one processor, or may be a collective term for a plurality of processing elements. For example, the processor may be a general-purpose central processing unit (Central Processing Unit, CPU), or may be an application-specific integrated circuit (application-specific Integrated Circuit, ASIC), or one or more integrated circuits for controlling execution of programs of solutions of this application, such as one or more microprocessors (Digital Signal Processor, DSP) or one or more field programmable gate arrays (Field Programmable Gate Array, FPGA). During specific implementation, in an embodiment, the processor may include one or more CPUs.

The storage circuit 110 may be a read-only memory (read-only memory, ROM) or another type of static storage device capable of storing static information and instructions, or a random access memory (random access memory, RAM) or another type of dynamic storage device capable of storing information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, this does not constitute a limitation herein.

The storage circuit 110 may be configured to store data such as a current, a voltage, and power of the inverter circuit 107. In this embodiment of this application, the storage circuit 110 is further configured to store application program code for performing solutions of this application, and the control circuit 109 controls execution of the application program code. To be specific, the control circuit 109 is configured to execute the application program code stored in the storage circuit 110.

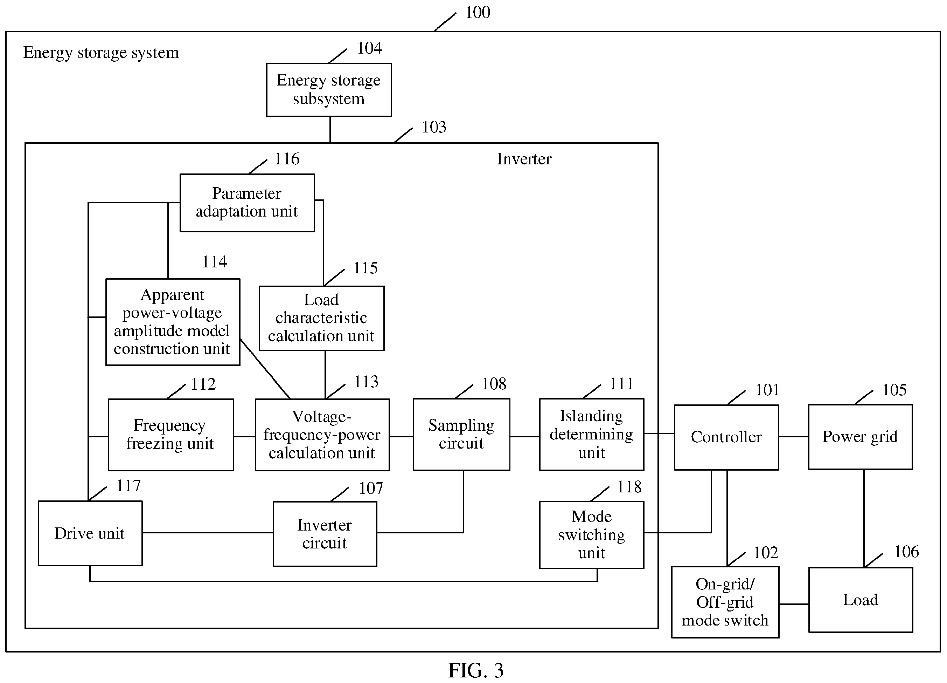

FIG. 3 is a schematic diagram of a structure of another energy storage system according to an embodiment of this application. As shown in FIG. 3, the inverter 103 may include an inverter circuit 107, a sampling circuit 108, an islanding determining unit 111, a frequency freezing unit 112, a voltage-frequency-power calculation unit 113, an apparent power-voltage amplitude model construction unit 114, a load characteristic calculation unit 115, a parameter adaptation unit 116, a drive unit 117, a mode switching unit 118, and the like. The islanding determining unit 111, the frequency freezing unit 112, the voltage-frequency-power calculation unit 113, the apparent power-voltage amplitude model construction unit 114, the load characteristic calculation unit 115, the parameter adaptation unit 116, the drive unit 117, and the mode switching unit 118 may be connected through a communication bus, and functions of the foregoing units may be implemented by an integrated circuit. The foregoing units may serve as the control circuit 109 in FIG. 2 after being integrated.

The islanding determining unit 111 may be configured to determine whether the energy storage system 100 is in an islanding state. The frequency freezing unit 112 may be configured to freeze an output frequency of the inverter 103. The voltage-frequency-power calculation unit 113 may be configured to calculate an output voltage, an output current, and the output frequency of the inverter 103. The apparent power-voltage amplitude model construction unit 114 may be configured to construct an association model between the output voltage and apparent power of the inverter 103, for example, an association relationship between the output voltage of the inverter 103 and the apparent power of the inverter 103. The load characteristic calculation unit 115 may be configured to calculate a full load characteristic of the load 106, for example, an association relationship between the output voltage of the inverter 103 and apparent power of the load 106. The parameter adaptation unit 116 may be configured to adjust an association parameter in an association model constructed by the apparent power-voltage amplitude model construction unit 114. The drive unit 117 may be configured to obtain a drive signal, so that the drive signal controls the output current of the inverter 103, and an output voltage corresponding to an output current obtained through control is obtained. The mode switching unit 118 may be configured to switch between the current source mode and the voltage source mode.

In this embodiment of this application, the controller 101 may be a control circuit for controlling on-grid/off-grid mode switching, for example, a power plant controller (Power Plant Controller, PPC), or may be another controller, for example, a system control unit (System Control Unit, SCU). This is not limited herein.

The on-grid/off-grid mode switch 102 is configured to connect to the power grid 105 in an on-grid mode, and disconnect from the power grid 105 in an off-grid mode. To be specific, the energy storage subsystem 104 is configured to supply power to the load 106 after the on-grid/off-grid mode switch 102 is disconnected from the power grid 105; and after the on-grid/off-grid mode switch 102 is connected to the power grid 105, the power grid 105 supplies power to the load 106. It should be noted that the power grid 105 and the energy storage subsystem 104 may simultaneously supply power to a load in the power grid 105. A switch status of the on-grid/off-grid mode switch 102 is not limited in this application. The on-grid/off-grid mode switch 102 may be connected to the power grid 105 when being turned on, and may be disconnected from the power grid 105 when being turned off; or may be disconnected from the power grid 105 when being turned on, and may be connected to the power grid 105 when being turned off.

The load 106 in this application may be an electric device such as an air conditioner, a mobile phone, a computer, an electric water heater, an electric kettle, or an electric vehicle. A type of the load 106 is not limited in this application. In addition, a quantity of loads 106 is not limited. In FIG. 1, one load is used as an example for description.

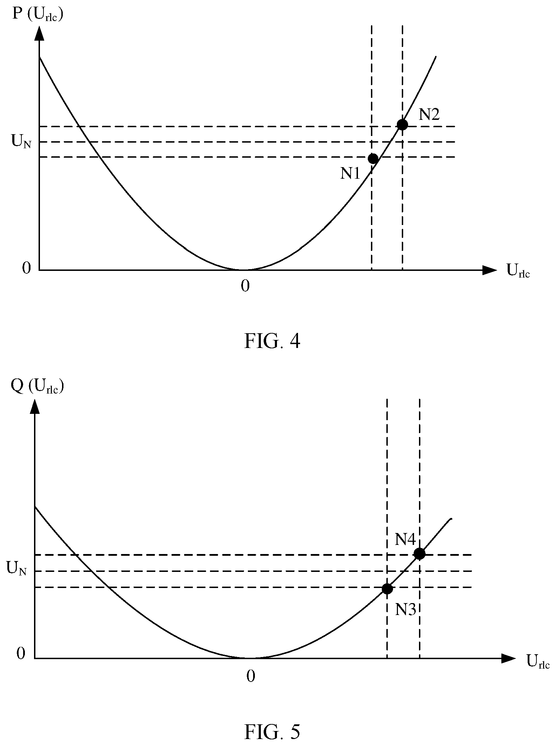

For load characteristics of a resistive load, active power and a voltage amplitude are in a parabolic relationship. As shown in a formula 1 and FIG. 4, when a line segment corresponding to a point N1 and a point N2 indicates that an output voltage meets a small variation range of a rated voltage $U_N$, the parabola is approximately a straight line.

$$P_{rlc}(U_{rlc}) = \frac{U_{rlc}^2}{R_{rlc}} \qquad \text{(Formula 1)}$$

$U_{rlc}$ is an output voltage of the load, $R_{rlc}$ is resistance of the load, $P_{rlc}(U_{rlc})$ is active power of the load, and the active power of the load varies with the output voltage of the load.

For characteristic curves of capacitive and inductive loads, reactive power, a voltage amplitude, and a frequency are in a three-dimensional nonlinear relationship. As shown in a formula 2, the reactive power, the voltage amplitude, and the frequency are in a three-dimensional relationship.

$$Q_{rlc}(U_{rlc}, f_{rlc}) = U_{rlc}^2 \left( 2\pi f_{rlc} C_{rlc} - \frac{1}{2\pi f_{rlc} L_{rlc}} \right) \qquad \text{(Formula 2)}$$

$U_{rlc}$ is an output voltage of the load, $f_{rlc}$ is a frequency of the load, $C_{rlc}$ is capacitance of the load, $L_{rlc}$ is inductance of the load, $Q_{rlc}(U_{rlc}, f_{rlc})$ is reactive power of the load, and the reactive power of the load varies with the output voltage and the frequency of the load.

It should be noted that the structure shown in this embodiment of this application does not constitute a specific limitation on the energy storage system 100. In some other embodiments of this application, the energy storage system 100 may include more or fewer components than those shown in the figure, or some components may be combined, or some components may be split, or there may be a different component layout. The components shown in the figure may be implemented by using hardware, software, or a combination of software and hardware.

For example, the energy storage system 100 may further include a transformer that is not shown in FIG. 1. A secondary side of the transformer may be independently connected to the inverter 103, or may be connected to the inverter 103 through alternating-current coupling, and a primary side of the transformer may be connected to the on-grid/off-grid mode switch 102. The transformer may include a DC/DC converter that may be configured to convert an alternating-current voltage output by the inverter 103 into a voltage form required by the load 106. In specific actual application, a circuit of the DC/DC converter may be disposed based on a specific application environment. For example, a buck circuit, a boost circuit, or a buck-boost circuit may be disposed.

In this embodiment of this application, the inverter 103 is configured to determine whether the energy storage system 100 is in the islanding state.

The islanding state is a state in which the energy storage system 100 independently supplies power to the load 106, that is, the power grid does not supply power to the load 106. A method for determining whether the energy storage system 100 is in the islanding state is not limited in this application. In a possible example, the inverter 103 is specifically configured to: in response to that an operation mode is the current source mode, determine, based on the output voltage of the inverter, whether the energy storage system is in the islanding state.

When the operation mode of the inverter 103 is the current source mode, the energy storage system 100 is in the on-grid mode. The inverter 103 may obtain the output voltage and the output current of the inverter 103 in real time. The output voltage of the inverter 103 is an alternating-current voltage, and the output current of the inverter 103 is an alternating current. Because the inverter 103 serves as an output end of the energy storage system 100 to supply power to the load 106, the output voltage and the output current of the inverter 103 may also be referred to as a voltage and a current on a power grid entry side of the inverter 103.

In a possible example, the inverter 103 may include at least one of a harmonic impedance method, a reactive scrambling method, and a voltage frequency distortion method, and determine, based on the output voltage of the inverter 103, whether the energy storage system 100 is in the islanding state.

The harmonic impedance method is based on that power grid impedance detected by the inverter 103 changes in two different working conditions: the on-grid mode and the off-grid mode. Therefore, whether the power grid is disconnected may be determined by detecting harmonic impedance. In other words, whether the energy storage system 100 is in the islanding state is determined by detecting harmonic impedance. Specifically, a change of even-order harmonics in the output voltage of the inverter 103 may be detected. When the inverter 103 is connected to the power grid, harmonics output by an alternating current port of the inverter 103 enter the power grid. Because internal impedance of the power grid is quite small in the on-grid mode, a total harmonic distortion rate at the alternating current port of the inverter 103 is usually low. Therefore, when the even-order harmonics in the output voltage of the inverter 103 change slightly, it is determined that the inverter 103 still operates based on the on-grid mode, that is, the energy storage system 100 is still in the on-grid mode. If the power grid is disconnected, because impedance of a local load is usually much higher than that of the power grid, large harmonics occur at the alternating current port of the inverter 103. Consequently, harmonics at the alternating current port of the inverter 103 change abruptly. Therefore, when the even-order harmonics in the output voltage of the inverter 103 change greatly, it is determined that the inverter 103 may have been disconnected from the power grid, and it is determined that the energy storage system 100 is in the islanding state.

The reactive scrambling method is a conventional anti-islanding protection method. The reactive scrambling method is based on that higher reactive power causes a larger frequency offset in the islanding state. Therefore, reactive power may be injected into the energy storage system 100, and a frequency offset of the inverter 103 is determined based on the output voltage of the inverter 103. When it is determined that the frequency offset of the inverter 103 is large, it is determined that the energy storage system 100 is in the islanding state.

The voltage frequency distortion method is based on the following: When an amplitude, a frequency, or a phase of the output voltage of the inverter 103 changes greatly, it is determined that the power grid is abnormal, and it is determined that the energy storage system 100 is in the islanding state.

Misjudgment may occur in the harmonic impedance method and the voltage frequency distortion method. The reactive scrambling method takes a long time. Before it is determined that the energy storage system 100 is in the islanding state, voltage distortion, frequency distortion, or a sudden phase change may have occurred, affecting power supply to the load.

It should be noted that the harmonic impedance method, the voltage frequency distortion method, and the reactive scrambling method do not constitute a limitation on this embodiment of this application. In actual application, another method or a combination of the foregoing methods may be used to determine whether the energy storage system is in the islanding state. It can be understood that whether the energy storage system is in the islanding state may be determined by using at least two of the harmonic impedance method, the voltage frequency distortion method, and the reactive scrambling method, so that accuracy of islanding determining can be improved.

In this embodiment of this application, the inverter 103 is further configured to: in response to determining that the energy storage system 100 is in the islanding state, send an islanding state message to the controller 101, so that the controller 101 sends a disconnection instruction to the on-grid/off-grid mode switch 102, and sends a switching instruction to the inverter 103.

The islanding state message indicates that the inverter 103 determines that the energy storage system 100 is in the islanding state, and may include indication information indicating that the energy storage system 100 is in the islanding state, or may include a parameter for determining that the energy storage system 100 is in the islanding state, or the like. This is not limited herein. The disconnection instruction instructs the on-grid/off-grid mode switch 102 to disconnect from the power grid 105, and the switching instruction instructs the inverter 103 to switch to the voltage source mode.

It can be understood that, if it is determined that the energy storage system 100 is in the islanding state, the energy storage system 100 may currently enter the off-grid mode, and needs to indicate the on-grid/off-grid mode switch 102 to disconnect from the power grid 105, and needs to indicate the inverter 103 to switch from the current source mode to the voltage source mode. However, during on-grid/off-grid mode switching, the inverter 103 takes a long time to control the output voltage, the on-grid/off-grid mode switch 102 has a mechanical delay, a transmission delay occurs when a disconnection complete message is sent to the controller 101 after the on-grid/off-grid mode switch 102 is disconnected, and so on. As a result, the on-grid/off-grid mode switching takes a long time, and voltage distortion or frequency distortion may occur during the switching, affecting power supply to the load 106.

Based on this, in this embodiment of this application, the inverter 103 is further configured to: in response to that the energy storage system 100 is in the islanding state, freeze the output frequency of the inverter 103 based on a preset frequency, and control the output current of the inverter 103 based on an association relationship that the output voltage of the inverter 103 is in proportion to the apparent power of the inverter 103, so that the output voltage of the inverter 103 meets a preset range of a rated voltage.

The preset frequency may be a rated frequency of the load 106. The rated frequency of the load 106 is a frequency preset for the load 106, and may be 50 Hz or the like. It can be understood that the rated frequency of the load 106 is a frequency suitable for operation of the load 106, and the rated frequency of the load 106 is used as the preset frequency for freezing the output frequency of the inverter 103, so that the output frequency of the inverter 103 is the rated frequency of the load 106. This improves operation stability of the load 106.

Alternatively, the preset frequency may be a frequency of the inverter 103 when the energy storage system 100 is in an islanding state, or the like. This is not limited herein. To improve efficiency of on-grid/off-grid mode switching, it may be assumed that the on-grid/off-grid mode switching takes a short time, and it may be considered that the load 106 remains unchanged or changes slightly. In this case, the frequency of the inverter 103 when the energy storage system 100 is in the islanding state is used as the preset frequency, and the output frequency of the inverter 103 is frozen based on the preset frequency, so that the output frequency of the inverter 103 is the frequency of the inverter 103 when the energy storage system 100 is in the islanding state, and an input frequency of the load 106 does not change within a short time. This can improve operation stability of the load 106.

The rated voltage is not limited in this application, and may be 220 V or another value. In addition, the preset range is not limited in this application, and may be $\pm 10\%$ or the like.

In this embodiment of this application, the association relationship may be represented by an association function between the output voltage of the inverter 103 and the apparent power of the inverter 103. On the premise that the load 106 remains unchanged or changes slightly, after the output frequency of the inverter 103 is frozen based on the preset frequency, $f_{rlc}$ in the formula 2 may be considered as a fixed value, and the fixed value is the preset frequency. As shown in a formula 3 and FIG. 5, reactive power and a voltage amplitude of an output voltage are in a parabolic relationship, and when a line segment corresponding to points N3 and N4 indicates that an output voltage meets a small variation range of a rated voltage $U_N$, the parabola is approximately a straight line.

$$Q_{rlc}(U_{rlc}) = U_{rlc}^2 \left( 2\pi f_{rlc} C_{rlc} - \frac{1}{2\pi f_{rlc} L_{rlc}} \right) \qquad \text{(Formula 3)}$$

$U_{rlc}$ is an output voltage of the load, $f_{rlc}$ is a frequency of the load, $C_{rlc}$ is capacitance of the load, $L_{rlc}$ is inductance of the load, $Q_{rlc}(U_{rlc})$ is reactive power of the load, and the reactive power of the load varies with the output voltage of the load.

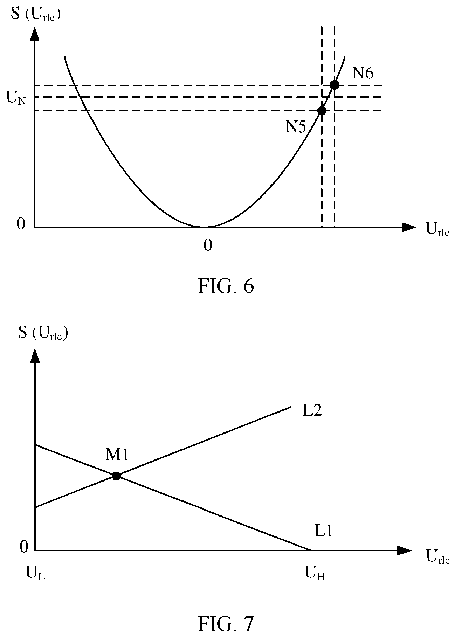

It can be learned from the formula 1 and the formula 3 that, after the output frequency of the inverter is frozen based on the preset frequency, regardless of a resistive, inductive, or capacitive load, a load characteristic is that power and a voltage amplitude of an output voltage are approximately in a linear relationship. A full load characteristic of the load is shown in a formula 4 and FIG. 6. Apparent power and a voltage amplitude of an output voltage are in a parabolic relationship, and when a line segment corresponding to a point N5 and a point N6 indicates that an output voltage meets a small variation range of a rated voltage $U_N$, the parabola is approximately a straight line.

$$S_{rlc}(U_{rlc}) = \sqrt{[P_{rlc}(U_{rlc})]^2 + [Q_{rlc}(U_{rlc})]^2} \qquad \text{(Formula 4)}$$

$U_{rlc}$ is an output voltage of the load, $P_{rlc}(U_{rlc})$ is active power of the load, $Q_{rlc}(U_{rlc})$ is reactive power of the load, and $S_{rlc}(U_{rlc})$ is apparent power of the load.

It can be learned that, on the premise that the load 106 remains unchanged or changes slightly, after the output frequency of the inverter is frozen based on the preset frequency, an approximately linear association relationship that the apparent power is positively correlated with the output voltage may be obtained. Therefore, an amplitude of the output voltage of the load 106 can be dynamically adjusted by dynamically changing the apparent power output by the inverter 103. To be specific, when it is detected that the output voltage of the load 106 is high, the output power of the inverter 103 may be reduced; or when it is detected that the output voltage of the load 106 is low, output power of the inverter 103 may be increased.

Based on this, on the premise that the load 106 remains unchanged or changes slightly, after the output frequency of the inverter 103 is frozen based on the preset frequency, an approximately linear association relationship that the output voltage of the inverter 103 is negatively correlated with the apparent power of the inverter 103, and an approximately linear association relationship that the output voltage of the inverter 103 is positively correlated with the apparent power of the load 106 may be obtained. As shown in FIG. 7, a line segment L1 is used to describe the association relationship between the output voltage of the inverter 103 and the apparent power of the inverter 103, and a line segment L2 is used to describe the association relationship between the output voltage of the inverter 103 and the apparent power of the load 106. The line segment L1 and the line segment L2 have an intersection point, and the intersection point may be considered as a point at which the energy storage system 100 operates stably under the action of the two association relationships, or may be understood as a voltage at which the output voltage of the inverter 103 is not distorted. In other words, when the inverter 103 operates at an output voltage and apparent power that correspond to the intersection point, a voltage distortion event can be avoided. It should be noted that an amplitude of the output voltage corresponding to the intersection point is between a minimum output voltage $U_L$ and a maximum output voltage $U_H$ of the inverter 103 within the preset range of the rated voltage.

$U_L$ and $U_H$ may alternatively be considered as a maximum output voltage and a minimum output voltage of the load 106 within the preset range of the rated voltage. Values of $U_L$ and $U_H$ are not limited in this application. When the load 106 is sensitive to a voltage change, a range between $U_L$ and $U_H$ is small. For example, when the load 106 is sensitive to a voltage change and the rated voltage is 800 VAC, $U_L$ may be equal to $800 \times 0.85 = 680$ VAC, and $U_H$ may be equal to $800 \times 1.1 = 920$ VAC; or when the load 106 is insensitive to a voltage change and the rated voltage is 800 VAC, $U_L$ may be equal to $800 \times 0.8 = 640$ VAC, and $U_H$ may be equal to $800 \times 1.2 = 960$ VAC.

It can be understood that, after it is determined that the energy storage system 100 is in the islanding state, the output frequency of the inverter 103 may be further frozen based on the preset frequency, so that a frequency distortion event can be avoided. In addition, the output current of the inverter 103 may be controlled based on the association relationship that the output voltage of the inverter 103 is negatively correlated with the apparent power of the inverter 103 within the preset range of the rated voltage, so that the inverter 103 operates stably, and the output voltage meets the preset range of the rated voltage. In this way, a voltage distortion event can be avoided. In addition, the output voltage is controlled by controlling the output current. Compared with directly controlling the output voltage, this improves control efficiency of the inverter 103, and improves operation stability of the load 106.

A method for obtaining the association relationship between the output voltage of the inverter 103 and the apparent power of the inverter 103 is not limited in this application. On the premise that a magnitude of the load 106 does not exceed rated power of the inverter 103, a range of the apparent power of the inverter 103 is mapped to an operation range of the output voltage. To be specific, the maximum output voltage $U_H$ of the inverter 103 corresponds to minimum apparent power of the inverter 103, and the minimum output voltage $U_L$ of the inverter 103 corresponds to maximum apparent power of the inverter 103. In a possible example, the inverter 103 is further configured to obtain a first association relationship that the output voltage of the inverter 103 is negatively correlated with the apparent power of the inverter 103, based on the minimum output voltage $U_L$ and the maximum output voltage $U_H$ of the inverter 103 within the preset range of the rated voltage, the maximum apparent power corresponding to the minimum output voltage $U_L$, and the minimum apparent power corresponding to the maximum output voltage $U_H$.

In this way, the first association relationship is obtained based on the minimum output voltage $U_L$ of the inverter 103 within the preset range of the rated voltage, the maximum apparent power corresponding to the minimum output voltage $U_L$, the maximum output voltage $U_H$ of the inverter 103 within the preset range of the rated voltage, and the minimum apparent power corresponding to the maximum output voltage $U_H$ (for example, a linear equation in two unknowns is solved based on the minimum output voltage $U_L$, the maximum apparent power, the maximum output voltage $U_H$, and the minimum apparent power, to obtain a linear equation corresponding to the first association relationship). This improves accuracy of obtaining the first association relationship.

The maximum apparent power may be the rated power $P_N$ of the inverter 103. The minimum apparent power may be 0. The linear equation corresponding to the first association relationship includes a first formula. The first formula is shown in a formula (5).

$$S_1(U_i) = \frac{P_N}{U_L - U_H} U_i - \frac{P_N}{U_L - U_H} U_H \qquad \text{(Formula 5)}$$

In a possible example, the inverter 103 is specifically configured to: control the output current of the inverter based on the first association relationship that the output voltage of the inverter is negatively correlated with the apparent power of the inverter, to obtain a first stable output voltage of the inverter and first apparent power corresponding to the first stable output voltage, where a variation range of the first stable output voltage is less than or equal to the preset range; adjust the first association relationship based on a second association relationship that the output voltage of the inverter is positively correlated with apparent power of the load, and a magnitude relationship between the first stable output voltage and the rated voltage, to obtain a third association relationship that the output voltage of the inverter is negatively correlated with the apparent power of the inverter; and control the output current of the inverter based on the third association relationship and the rated voltage, so that the output voltage of the inverter meets the preset range of the rated voltage.

The variation range of the first stable output voltage is less than or equal to the preset range. To be specific, when the output voltage of the inverter 103 is between the minimum output voltage $U_L$ and the maximum output voltage $U_H$, and the variation range of the output voltage of the inverter 103 is less than or equal to the preset range, a corresponding output voltage may be determined as the first stable output voltage.

It can be understood that, after the output frequency of the inverter 103 is frozen based on the preset frequency, the output voltage of the inverter 103 may be controlled based on the output current of the inverter 103 and the first association relationship that the output voltage of the inverter 103 is negatively correlated with the apparent power of the inverter 103, to obtain the first stable output voltage and the first apparent power corresponding to the first stable output voltage. This can avoid frequency distortion and voltage distortion of the load 106, and can ensure that the load 106 can operate stably within a short period of time.

The first stable output voltage may be unequal to the rated voltage, and a load characteristic of the load 106 is not considered in the first association relationship. It is difficult to obtain a voltage for continuous and stable operation by controlling the output current of the inverter 103 based on the first association relationship. As described above, the intersection point between the association relationship between the output voltage of the inverter 103 and the apparent power of the inverter 103, and the association relationship between the output voltage of the inverter 103 and the apparent power of the load 106 is a stable point, and the first association relationship may be optimized based on the association relationship between the output voltage of the inverter 103 and the apparent power of the load 106.

In this embodiment of this application, the association relationship between the output voltage of the inverter 103 and the apparent power of the load 106 is referred to as the second association relationship, and the second association relationship describes a full load characteristic of the load 106 after the output frequency of the inverter 103 is frozen based on the preset frequency. The third association relationship is an association relationship obtained by adjusting the first association relationship, and is obtained by adjusting the second association relationship between the output voltage of the inverter 103 and the apparent power of the load 106. Because the second association relationship describes the full load characteristic after the output frequency of the inverter 103 is frozen based on the preset frequency, accuracy of describing, by the third association relationship, the association relationship between the output voltage and the apparent power of the inverter 103 can be improved. After the output current of the inverter 103 is controlled based on the third association relationship and the rated voltage, accuracy and efficiency of making the output voltage of the inverter 103 meet the preset range of the rated voltage can be improved, so that operation stability of the load 106 is improved.

A method for obtaining the second association relationship is not limited in this application. Two points at which the load 106 can operate stably may be first determined, and then a straight line may be determined based on the two points, to obtain the association relationship between the output voltage of the inverter 103 and the apparent power of the inverter 103.

As described above, the first stable output voltage and the first apparent power are a point in the second association relationship. A method for obtaining another point in the second association relationship is not limited in this application. In a possible example, the inverter 103 is further configured to: adjust the first association relationship based on the magnitude relationship between the first stable output voltage and the rated voltage, to obtain a fourth association relationship that the output voltage of the inverter 103 is negatively correlated with the apparent power of the inverter 103; and control the output voltage of the inverter 103 based on the fourth association relationship and the output current of the inverter 103, to obtain a second stable output voltage of the inverter 103 and second apparent power corresponding to the second stable output voltage.

The fourth association relationship is an association relationship obtained by adjusting the first association relationship. In this case, the fourth association relationship also describes an association relationship that the output voltage of the inverter 103 is negatively correlated with the apparent power of the inverter 103. A variation range of the second stable output voltage is less than or equal to the preset range. To be specific, the second stable output voltage is a stable output voltage obtained by controlling the output voltage of the inverter 103 based on the second association relationship, the stable output voltage is between the minimum output voltage $U_L$ and the maximum output voltage $U_H$, and a variation range of the stable output voltage is less than or equal to the preset range.

A method for obtaining the fourth association relationship is not limited in this application, and a slope and an intercept of a line segment corresponding to the first association relationship may be adjusted. To enable the second stable output voltage closer to the rated voltage than the first stable output voltage, in a possible example, the fourth association relationship indicates that when the first stable output voltage is less than the rated voltage, maximum apparent power corresponding to the inverter 103 within the preset range of the rated voltage in the fourth association relationship is greater than maximum apparent power corresponding to the inverter 103 within the preset range of the rated voltage in the first association relationship; or when the first stable output voltage is greater than or equal to the rated voltage, maximum apparent power corresponding to the inverter 103 within the preset range of the rated voltage in the fourth association relationship is less than maximum apparent power corresponding to the inverter 103 within the preset range of the rated voltage in the first association relationship.

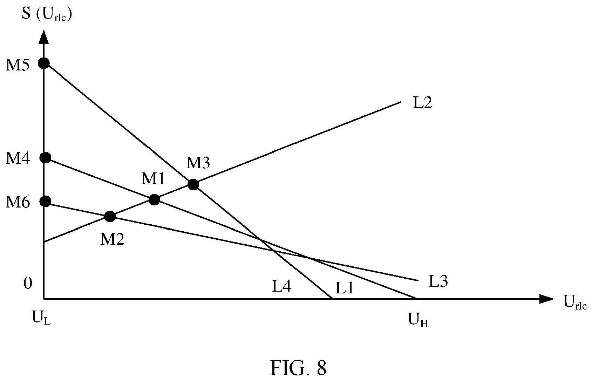

As shown in FIG. 8, a line segment L1, a line segment L3, and a line segment L4 each describe an association relationship between the output voltage of the inverter 103 and the apparent power of the inverter 103, a line segment L2 describes an association relationship (namely, the second association relationship) between the output voltage of the inverter 103 and the apparent power of the load 106, the line segment L1 may be a line segment corresponding to the first association relationship, and the line segment L3 and the line segment L4 may be different line segments corresponding to the fourth association relationship. It can be learned that the line segment L1, the line segment L3, and the line segment L4 each have an intersection point with the line segment L2, and the intersection points are M1, M2, and M3 respectively. As described above, an intersection point between a line segment corresponding to the output voltage of the inverter 103 and the apparent power of the inverter 103 and a line segment corresponding to the output voltage of the inverter 103 and the apparent power of the load 106 is a point corresponding to an output voltage and apparent power at which the inverter 103 operates stably. To enable the load 106 to stably operate at the rated voltage, the first association relationship needs to be adjusted to obtain the fourth association relationship. To be specific, when the first stable output voltage corresponding to the intersection point M1 is less than the rated voltage, the line segment L1 may be adjusted to the line segment L4, so that an output voltage corresponding to the intersection point M3 between the line segment L2 and the line segment L4 corresponding to the fourth association relationship is greater than the first stable output voltage, and maximum apparent power corresponding to an intersection point M5 between the line segment L4 and a vertical axis is greater than maximum apparent power corresponding to an intersection point M4 between the line segment L1 and the vertical axis; or when the first stable output voltage is greater than or equal to the rated voltage, the line segment L1 may be adjusted to the line segment L3, so that an output voltage corresponding to the intersection point M2 between the line segment L2 and the line segment L3 corresponding to the fourth association relationship is less than the first stable output voltage, and maximum apparent power corresponding to an intersection point M6 between the line segment L3 and the vertical axis is less than maximum apparent power corresponding to an intersection point M4 between the line segment L1 and the vertical axis. In this way, the output voltage of the inverter 103 is controlled based on an adjusted second association relationship and an adjusted output current of the inverter 103, so that the second stable output voltage closer to the rated voltage than the first stable output voltage can be obtained.

In a possible example, the fourth association relationship includes a second formula, and the second formula is shown in a formula (6).

$$S_1^*(U_i) = \begin{cases} \frac{P_N}{U_L - [U_H + k_1(U_N - U_1)]} U_i - \frac{P_N}{U_L - [U_H + k_1(U_N - U_1)]} [U_H + k_1(U_N - U_1)], U_i < U_N \\ \frac{P_N\left(1 + \frac{U_N - U_1}{U_N}k_2\right)}{U_L - U_H} U_i - \frac{P_N\left(1 + \frac{U_N - U_1}{U_N}k_2\right)}{U_L - U_H} U_H, U_i \geq U_N \end{cases}$$ (Formula 6)

$P_N$ is the rated power of the inverter 103, $U_L$ is the minimum output voltage of the inverter 103, $U_H$ is the maximum output voltage of the inverter 103 within the preset range of the rated voltage, $U_i$ is the output voltage of the inverter 103, $S_1^*(U_i)$ is apparent power of the inverter 103 when the output voltage of the inverter 103 is $U_i$, $U_1$ is the first stable output voltage, $U_N$ is the rated voltage, $k_1$ is an association coefficient in the second formula when the first stable output voltage is less than the rated voltage, and $k_2$ is an association coefficient in the second formula when the first stable output voltage is greater than or equal to the rated voltage.

To be specific, when the first stable output voltage $U_1$ is less than the rated voltage $U_N$, the slope and the intercept of the line segment corresponding to the first association relationship are adjusted based on the association coefficient $k_1$, so that an intersection point between a line segment corresponding to the fourth association relationship and a line segment corresponding to the second association relationship is located on a right side of an intersection point between the line segment corresponding to the first association relationship and the line segment corresponding to the second association relationship, so that the second stable output voltage is greater than the first stable output voltage. When the first stable output voltage $U_1$ is greater than or equal to the rated voltage $U_N$, the slope and the intercept of the line segment corresponding to the first association relationship are adjusted based on the association coefficient $k_2$, so that an intersection point between a line segment corresponding to the fourth association relationship and a line segment corresponding to the second association relationship is located on a left side of an intersection point between the line segment corresponding to the first association relationship and the line segment corresponding to the second association relationship, so that the second stable output voltage is less than the first stable output voltage.

After obtaining a second point (to be specific, a point corresponding to the second stable output voltage and the second apparent power) in the second association relationship, in a possible example, the inverter 103 is further configured to obtain, based on the first stable output voltage, the first apparent power, the second stable output voltage, and the second apparent power, the second association relationship that the output voltage of the inverter 103 is positively correlated with the apparent power of the load. In this way, accuracy of obtaining the second association relationship is improved.

In a possible example, the second association relationship includes a third formula, and the third formula is shown in a formula (7).

$$S_2(U_i) = \frac{S_1^*(U_2) - S_1(U_1)}{U_2 - U_1} U_i + \frac{S_1^*(U_2) - S_1(U_1)}{U_2 - U_1} U_1 - S_1(U_i) \quad \text{(Formula 7)}$$

$U_i$ is the output voltage of the inverter, $U_1$ is the first stable output voltage, $U_2$ is the second stable output voltage, $S_1(U_1)$ is the first apparent power, $S_1^*(U_2)$ is the second apparent power, $S_1(U_i)$ is apparent power of the inverter when the output voltage of the inverter is $U_i$, and $S_2(U_i)$ is apparent power of the load when the output voltage of the inverter is $U_i$.

After obtaining the second association relationship, in a possible example, the inverter 103 is specifically configured to adjust the fourth association relationship based on the second association relationship and the magnitude relationship between the first stable output voltage and the rated voltage, to obtain the third association relationship that the output voltage of the inverter 103 is negatively correlated with the apparent power of the inverter 103. In this way, accuracy of obtaining the third association relationship can be improved.

A method for adjusting the fourth association relationship is not limited in this application. In a possible example, the inverter 103 is specifically configured to: determine a value of the association coefficient in the fourth association relationship based on the second association relationship and the magnitude relationship between the first stable output voltage and the rated voltage; and update the fourth association relationship based on the value of the association coefficient, to obtain the third association relationship.

As described above, the association coefficient is used to adjust a slope and an intercept of an association relationship. To be specific, after the association coefficient is updated, the line segment corresponding to the fourth association relationship may be adjusted, so that an output voltage at an intersection point between line segments corresponding to the third association relationship and the second association relationship is the rated voltage.

A method for determining the value of the association coefficient is not limited in this application. In a possible example, a calculation formula for the value k of the association coefficient includes a fourth formula, and the fourth formula is shown in a formula (8).

$$k = \begin{cases} \frac{(U_N - U_H)P_N - (U_L - U_H)S_2(U_N)}{(U_N - U_1)[P_N - S_2(U_N)]}, & U_i < U_N \\ \frac{[(U_N - U_H)P_N - (U_L - U_H)S_2(U_N)](U_N)}{(U_N - U_H)(U_1 - U_H)P_N}, & U_i \geq U_N \end{cases} \quad \text{(Formula 8)}$$

$P_N$ is the rated power of the inverter, $U_L$ is the minimum output voltage of the inverter, $U_H$ is the maximum output voltage of the inverter, $U_1$ is the first stable output voltage, and $S_2(U_i)$ is apparent power of the load when the output voltage of the inverter is $U_N$.

After the fourth association relationship is obtained, the output voltage of the inverter 103 may be controlled based on a current output current and the rated voltage of the inverter 103, so that the output voltage meets the preset range of the rated voltage. A method for controlling the output voltage of the inverter 103 to meet the preset range of the rated voltage is not limited in this application. In a possible example, the inverter 103 is specifically configured to: obtain, based on the third association relationship, target apparent power corresponding to the rated voltage; and control the output voltage of the inverter based on the target apparent power and the output current of the inverter.

It can be understood that the third association relationship describes an association relationship between the output voltage and the apparent power of the inverter 103, so that the target apparent power corresponding to the rated voltage can be obtained based on the third association relationship. In addition, the apparent power is related to the output voltage and the output current, so that a current output current of the inverter 103 can be tracked based on the target apparent power, to obtain a drive signal corresponding to the rated voltage. Then the inverter 103 is controlled to operate based on the drive signal, so that the output voltage of the inverter 103 is controlled, to make the output voltage of the inverter 103 meet the preset range of the rated voltage. This improves control efficiency and operation stability of the inverter 103, and therefore improves operation stability of the load 106.

In this embodiment of this application, the controller 101 is further configured to: send a disconnection instruction to the on-grid/off-grid mode switch 102; and send a switching instruction to the inverter 103 in response to receiving a disconnection complete message from the on-grid/off-grid mode switch 102.

The disconnection instruction instructs the on-grid/off-grid mode switch 102 to disconnect from the power grid 105. The disconnection complete message indicates that the on-grid/off-grid mode switch 102 has been disconnected from the power grid 105. The switching instruction instructs the inverter 103 to switch to the voltage source mode. To be specific, after the on-grid/off-grid mode switch 102 is disconnected from the power grid, the disconnection complete message is sent to the controller 101 to indicate that the on-grid/off-grid mode switch 102 has been disconnected from the power grid, and then the inverter 103 is instructed to perform mode switching, to implement on-grid/off-grid mode switching. Because the on-grid/off-grid mode switch 102 has a mechanical delay and a transmission delay, before the inverter 103 performs mode switching, the inverter 103 may freeze the output frequency of the inverter 103, and then control the output voltage by controlling the output current of the inverter 103, so that frequency distortion and voltage distortion events can be avoided, and operation stability of the load 106 is improved.

In this embodiment of this application, the inverter 103 is further configured to switch to the voltage source mode in response to receiving the switching instruction and determining that the output voltage of the inverter 103 meets the preset range of the rated voltage. To be specific, the inverter 103 switches to the voltage source mode only after receiving the disconnection complete message from the on-grid/off-grid mode switch 102 and determining that the inverter 103 operates stably and the output voltage of the inverter 103 meets the preset range of the rated voltage. This further improves operation stability of the load 106.

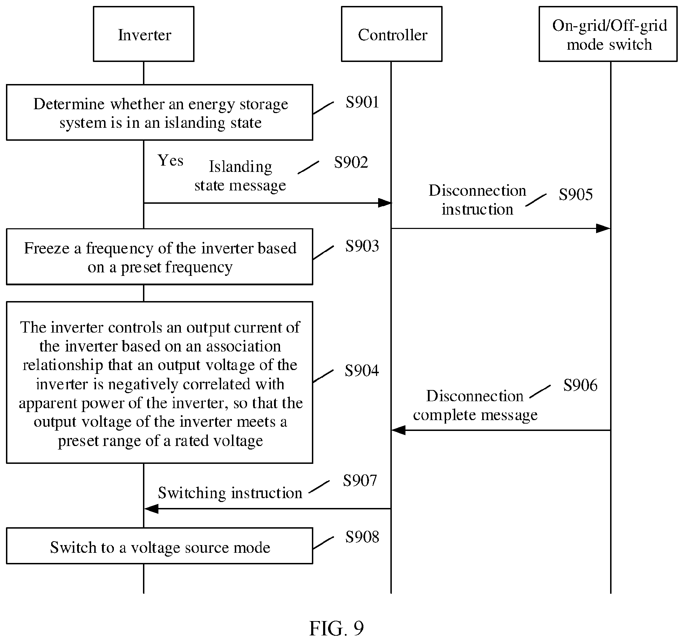

FIG. 9 shows an on-grid/off-grid mode switching method according to an embodiment of this application. The method is applied to an energy storage system, where the energy storage system includes a controller, an inverter, an on-grid/off-grid mode switch, a power grid, and a load. The method includes but is not limited to the following steps S901 to S908.

S901: The inverter determines whether the energy storage system is in an islanding state.

In this embodiment of this application, if it is determined in step S901 that the energy storage system is in the islanding state, step S902 and step S903 are performed; otherwise, step S901 is performed again.

In a possible example, step S901 includes: In response to that an operation mode is a current source mode, the inverter determines, based on an output voltage of the inverter, whether the energy storage system is in the islanding state. In this way, whether the energy storage system is in the islanding state is determined based on the output voltage of the inverter, so that efficiency and accuracy of determining the islanding state can be improved.

S902: The inverter sends an islanding state message to the controller.

S903: The inverter freezes an output frequency of the inverter based on a preset frequency.

S904: The inverter controls an output current of the inverter based on an association relationship that the output voltage of the inverter is negatively correlated with apparent power of the inverter, so that the output voltage of the inverter meets a preset range of a rated voltage.

In a possible example, step S904 includes: The inverter controls the output current of the inverter based on a first association relationship that the output voltage of the inverter is negatively correlated with the apparent power of the inverter, to obtain a first stable output voltage of the inverter and first apparent power corresponding to the first stable output voltage. A variation range of the first stable output voltage is less than or equal to the preset range.

In a possible example, the method further includes: The inverter adjusts the first association relationship based on the second association relationship that the output voltage of the inverter is positively correlated with apparent power of the load, and a magnitude relationship between the first stable output voltage and the rated voltage, to obtain a third association relationship that the output voltage of the inverter is negatively correlated with the apparent power of the inverter; and the inverter controls the output current of the inverter based on the third association relationship and the rated voltage, so that the inverter operates stably, and the output voltage of the inverter meets the preset range of the rated voltage.

In a possible example, before the controlling the output current of the inverter based on a first association relationship that the output voltage of the inverter is negatively correlated with the apparent power of the inverter, to obtain a first stable output voltage of the inverter and first apparent power corresponding to the first stable output voltage, the method further includes: obtaining the first association relationship based on a minimum output voltage and a maximum output voltage of the inverter within the preset range of the rated voltage, maximum apparent power corresponding to the minimum output voltage, and minimum apparent power corresponding to the maximum output voltage.

It can be understood that the output voltage and the apparent power of the inverter are in a negative correlation relationship, so that the first association relationship can be obtained based on the minimum output voltage of the inverter within the preset range of the rated voltage, the maximum apparent power corresponding to the minimum output voltage, the maximum output voltage within the preset range of the rated voltage, and the minimum apparent power corresponding to the maximum output voltage. This improves accuracy of obtaining the first association relationship.

In a possible example, the first association relationship includes a first formula:

$$S_1(U_i) = \frac{P_N}{U_L - U_H} U_i - \frac{P_N}{U_L - U_H} U_H$$

$P_N$ is rated power of the inverter, $U_L$ is the minimum output voltage of the inverter within the preset range of the rated voltage, $U_H$ is the maximum output voltage of the inverter within the preset range of the rated voltage, $U_i$ is the output voltage of the inverter, and $S_1(U_i)$ is apparent power of the inverter when the output voltage of the inverter is $U_i$. In this way, the first association relationship is described by using the first formula, so that accuracy of obtaining the first association relationship can be improved.

In a possible example, the adjusting the first association relationship based on the second association relationship that the output voltage of the inverter is positively correlated with apparent power of the load, and a magnitude relationship between the first stable output voltage and the rated voltage, to obtain a third association relationship that the output voltage of the inverter is negatively correlated with the apparent power of the inverter includes: adjusting the first association relationship based on the magnitude relationship between the first stable output voltage and the rated voltage, to obtain a fourth association relationship that the output voltage of the inverter is negatively correlated with the apparent power of the inverter; controlling the output voltage of the inverter based on the fourth association relationship and the output current of the inverter, to obtain a second stable output voltage of the inverter and second apparent power corresponding to the second stable output voltage; obtaining, based on the first stable output voltage, the first apparent power, the second stable output voltage, and the second apparent power, the second association relationship that the output voltage of the inverter is positively correlated with the apparent power of the load; and adjusting the fourth association relationship based on the second association relationship and the magnitude relationship between the first stable output voltage and the rated voltage, to obtain the third association relationship that the output voltage of the inverter is negatively correlated with the apparent power of the inverter.

A variation range of the second stable output voltage is less than or equal to the preset range.

Assuming that on-grid/off-grid mode switching takes a short time, it may be considered that the load corresponding to the energy storage system remains unchanged or changes slightly, and an association relationship between the output voltage and the apparent power of the inverter is a negative correlation, and has an intersection point with an association relationship that the output voltage of the inverter is positively correlated with the apparent power of the load, where the intersection point indicates stable operation. Therefore, in this example, the first association relationship is first adjusted based on the magnitude relationship between the first stable output voltage and the rated voltage, to obtain the fourth association relationship. Then the output voltage of the inverter is controlled based on line segments corresponding to the first association relationship and the fourth association relationship respectively, to obtain the first stable output voltage and the first apparent power corresponding to the first stable output voltage, and the second stable output voltage and the second apparent power corresponding to the second stable output voltage. In this way, two points on a line segment corresponding to the output voltage of the inverter and the apparent power of the load are obtained. Then the second association relationship between the output voltage of the inverter and the apparent power of the load is obtained based on the first stable output voltage, the first apparent power, the second stable output voltage, and the second apparent power, so that accuracy of obtaining the second association relationship can be improved. Then the fourth association relationship is adjusted based on the second association relationship and the magnitude relationship between the first stable output voltage and the rated voltage, to obtain the third association relationship that the output voltage of the inverter is negatively correlated with the apparent power of the inverter, so that accuracy of obtaining the third association relationship can be improved. This helps improve operation stability of the load.

It can be understood that the output current of the inverter is controlled based on the fourth association relationship that is obtained by adjusting the first association relationship based on the magnitude relationship between the first stable output voltage and the rated voltage, to obtain the second stable output voltage, so that the second stable output voltage closer to the rated voltage than first stable output voltage can be obtained. This helps improve efficiency of controlling the output voltage. Then the second association relationship is obtained based on the first stable output voltage, the first apparent power, the second stable output voltage, and the second apparent power, so that accuracy of obtaining the second association relationship can be improved. Then the fourth association relationship is adjusted based on the second association relationship and the magnitude relationship between the first stable output voltage and the rated voltage, to obtain the third association relationship, so that efficiency of controlling the output voltage can be improved.

In a possible example, the fourth association relationship indicates that when the first stable output voltage is less than the rated voltage, maximum apparent power corresponding to the inverter within the preset range of the rated voltage in the fourth association relationship is greater than maximum apparent power corresponding to the inverter within the preset range of the rated voltage in the first association relationship; or when the first stable output voltage is greater than or equal to the rated voltage, maximum apparent power corresponding to the inverter within the preset range of the rated voltage in the fourth association relationship is less than maximum apparent power corresponding to the inverter within the preset range of the rated voltage in the first association relationship. In this way, compared with the first stable output voltage, the second stable output voltage obtained through control based on the fourth association relationship is closer to the rated voltage. This helps improve efficiency of controlling the output voltage.

In a possible example, the fourth association relationship includes a second formula:

$$
S_1^*(U_i)
$$

$$
= \begin{cases} \dfrac{P_N}{U_L - [U_H + k_1(U_N - U_1)]}U_i - \dfrac{P_N}{U_L - [U_H + k_1(U_N - U_1)]}[U_H + k_1(U_N - U_1)], U_i < U_N \\[4mm] \dfrac{P_N\left(1 + \dfrac{U_N - U_1}{U_N}k_2\right)}{U_L - U_H}U_i - \dfrac{P_N\left(1 + \dfrac{U_N - U_1}{U_N}k_2\right)}{U_L - U_H}U_H, U_i \geq U_N \end{cases}
$$

$P_N$ is rated power of the inverter, $U_L$ is the minimum output voltage of the inverter within the preset range of the rated voltage, $U_H$ is the maximum output voltage of the inverter within the preset range of the rated voltage, $U_i$ is the output voltage of the inverter, $S_1^*(U_i)$ is apparent power of the inverter when the output voltage of the inverter is $U_i$, $U_1$ is the first stable output voltage, $U_N$ is the rated voltage, $k_1$ is an association coefficient used when the first stable output voltage is less than the rated voltage, and $k_2$ is an association coefficient used when the first stable output voltage is greater than or equal to the rated voltage. In this way, the fourth association relationship is described by using the second formula, so that accuracy of obtaining the fourth association relationship can be improved. This helps improve efficiency of controlling the output voltage.

In a possible example, the second association relationship includes a third formula:

$$
S_2(U_i) = \frac{S_1^*(U_2) - S_1(U_1)}{U_2 - U_1}U_i + \frac{S_1^*(U_2) - S_1(U_1)}{U_2 - U_1}U_1 - S_1(U_i)
$$

$U_i$ is the output voltage of the inverter, $U_1$ is the first stable output voltage, $U_2$ is the second stable output voltage, $S_1(U_1)$ is the first apparent power, $S_1^*(U_2)$ is the second apparent power, $S_1(U_i)$ is apparent power of the inverter when the output voltage of the inverter is $U_i$, and $S_2(U_i)$ is apparent power of the load when the output voltage of the inverter is $U_i$. In this way, the second association relationship is described by using the third formula, so that accuracy of obtaining the second association relationship can be improved. This helps improve efficiency of controlling the output voltage.

In a possible example, the adjusting the fourth association relationship based on the second association relationship and the magnitude relationship between the first stable output voltage and the rated voltage, to obtain the third association relationship that the output voltage of the inverter is negatively correlated with the apparent power of the inverter includes: determining a value of the association coefficient in the fourth association relationship based on the second association relationship and the magnitude relationship between the first stable output voltage and the rated voltage; and updating the fourth association relationship based on the value of the association coefficient, to obtain the third association relationship.

It can be understood that the correlation coefficient in the fourth association relationship is updated based on the second association relationship and the magnitude relationship between the first stable output voltage and the rated voltage, so that accuracy of obtaining the third association relationship can be improved. This helps improve efficiency of controlling the output voltage.

In a possible example, a calculation formula for the value k of the correlation coefficient includes a fourth formula:

$$
k = \begin{cases} \dfrac{(U_N - U_H)P_N - (U_L - U_H)S_2(U_N)}{(U_N - U_1)[P_N - S_2(U_N)]}, U_i < U_N \\[4mm] \dfrac{[(U_N - U_H)P_N - (U_L - U_H)S_2(U_N)](U_N)}{(U_N - U_H)(U_1 - U_H)P_N}, U_i \geq U_N \end{cases}
$$

$P_N$ is rated power of the inverter, $U_L$ is the minimum output voltage of the inverter within the preset range of the rated voltage, $U_H$ is the maximum output voltage of the inverter within the preset range of the rated voltage, $U_1$ is the first stable output voltage, and $S_2(U_i)$ is apparent power of the load when the output voltage of the inverter is $U_N$. In this way, the value of the association coefficient in the fourth association relationship is obtained based on the fourth formula, so that accuracy of updating the fourth association relationship can be improved. This helps improve efficiency of controlling the output voltage.

In a possible example, the controlling the output current of the inverter based on the third association relationship and the rated voltage includes: obtaining, based on the third association relationship, target apparent power corresponding to the rated voltage; and controlling the output current of the inverter based on the target apparent power.

It can be understood that the third association relationship describes an association relationship between the output voltage and the apparent power of the inverter, so that the target apparent power corresponding to the rated voltage can be obtained based on the third association relationship. In addition, the apparent power is related to the output voltage and the output current, so that a current output current of the inverter can be tracked based on the target apparent power, to obtain a drive signal corresponding to the rated voltage. Then the inverter is controlled to operate based on the drive signal, so that the output voltage of the inverter is controlled, to make the output voltage of the inverter meet the preset range of the rated voltage. This improves control efficiency and operation stability of the inverter, and therefore improves operation stability of the load.

In a possible example, the preset frequency includes a rated frequency of the load, or an output frequency of the inverter in a case that the energy storage system is in the islanding state.

It can be understood that the rated frequency of the load is a frequency suitable for operation of the load, and the rated frequency of the load is used as the preset frequency for freezing the output frequency of the inverter, so that the output frequency of the inverter is the rated frequency of the load. This improves operation stability of the load. Alternatively, the output frequency of the inverter in a case that the energy storage system is in the islanding state is used as the preset frequency, and the output frequency of the inverter is frozen based on the preset frequency, so that the output frequency of the inverter is the output frequency of the inverter in a case that the energy storage system is in the islanding state, and an input frequency of the load does not change within a short time. This can improve operation stability of the load.

S905: The controller sends a disconnection instruction to the on-grid/off-grid mode switch.

The disconnection instruction instructs the on-grid/off-grid mode switch to disconnect from a power grid corresponding to the on-grid/off-grid mode switch.

S906: The on-grid/off-grid mode switch sends a disconnection complete message to the controller.

The disconnection complete message indicates that the on-grid/off-grid mode switch has been disconnected from the power grid.

S907: The controller sends a switching instruction to the inverter.

The switching instruction instructs the inverter to switch to a voltage source mode.

S908: The inverter switches to the voltage source mode.

In the method described in FIG. 9, after determining that the energy storage system is in the islanding state, the inverter sends the islanding state message to the controller, so that the on-grid/off-grid mode switch is disconnected from the power grid corresponding to the on-grid/off-grid mode switch. After it is determined that the energy storage system is in the islanding state, the output frequency of the inverter may be further frozen based on the preset frequency, so that a frequency distortion event can be avoided. In addition, the output current of the inverter may be controlled based on the association relationship that the output voltage of the inverter is negatively correlated with the apparent power of the inverter within the preset range of the rated voltage, so that the inverter operates stably, and the output voltage meets the preset range of the rated voltage. In this way, a voltage distortion event can be avoided. In addition, the output voltage is controlled by controlling the output current. Compared with directly controlling the output voltage, this improves control efficiency of the inverter, and improves operation stability of the load. After the on-grid/off-grid mode switch sends the disconnection complete message to the controller, the controller may send the switching instruction to the inverter. After receiving the switching instruction and determining that the inverter operates stably and the output voltage meets the preset range of the rated voltage, the inverter may switch to the voltage source mode, to implement on-grid/off-grid mode switching. This further improves operation stability of the load.

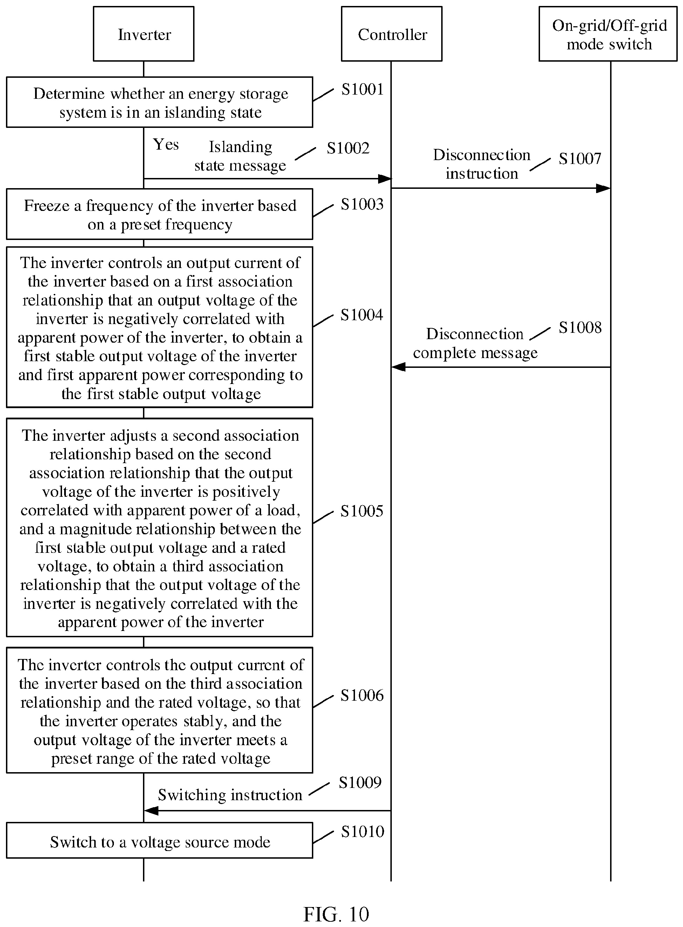

Similar to the embodiment in FIG. 9, FIG. 10 shows another on-grid/off-grid mode switching method according to an embodiment of this application. The method is applied to an energy storage system, where the energy storage system further includes a controller, a power grid, a load, an inverter, and an on-grid/off-grid mode switch. The method includes but is not limited to the following steps S1001 to S1010.

S1001: The inverter determines whether the energy storage system is in an islanding state.

In this embodiment of this application, if it is determined in step S1001 that the energy storage system is in the islanding state, step S1002 and step S1003 are performed; otherwise, step S1001 is performed again.

S1002: The inverter sends an islanding state message to the controller.

S1003: The inverter freezes an output frequency of the inverter based on a preset frequency.

S1004: The inverter controls an output current of the inverter based on a first association relationship that an output voltage of the inverter is negatively correlated with apparent power of the inverter, to obtain a first stable output voltage of the inverter and first apparent power corresponding to the first stable output voltage.

S1005: The inverter adjusts the first association relationship based on the second association relationship that the output voltage of the inverter is positively correlated with apparent power of the load, and a magnitude relationship between the first stable output voltage and a rated voltage, to obtain a third association relationship that the output voltage of the inverter is negatively correlated with the apparent power of the inverter.

S1006: The inverter controls the output current of the inverter based on the third association relationship and the rated voltage, so that the inverter operates stably, and the output voltage of the inverter meets a preset range of the rated voltage.

S1007: The controller sends a disconnection instruction to the on-grid/off-grid mode switch.

The disconnection instruction instructs the on-grid/off-grid mode switch to disconnect from a power grid corresponding to the on-grid/off-grid mode switch.

S1008: The on-grid/off-grid mode switch sends a disconnection complete message to the controller.

The disconnection complete message indicates that the on-grid/off-grid mode switch has been disconnected from the power grid.

S1009: The controller sends a switching instruction to the inverter.

The switching instruction instructs the inverter to switch to a voltage source mode.

S1010: The inverter switches to the voltage source mode.

In the method described in FIG. 10, after determining that the energy storage system is in the islanding state, the inverter sends the islanding state message to the controller, so that the on-grid/off-grid mode switch is disconnected from the power grid corresponding to the on-grid/off-grid mode switch. In addition, after it is determined that the energy storage system is in the islanding state, the output frequency of the inverter may be further frozen based on the preset frequency, so that a frequency distortion event can be avoided. In addition, the output current of the inverter is controlled based on the first association relationship that the output voltage of the inverter is negatively correlated with the apparent power of the inverter within the preset range of the rated voltage, to obtain the first stable output voltage of the inverter and the first apparent power corresponding to the first stable output voltage. Then the inverter adjusts the first association relationship based on the second association relationship that the output voltage of the inverter is positively correlated with apparent power of the load, and the magnitude relationship between the first stable output voltage and the rated voltage, to obtain the third association relationship that the output voltage of the inverter is negatively correlated with the apparent power of the inverter; and then controls the output current of the inverter based on the third association relationship and the rated voltage, so that the output voltage of the inverter meets the preset range of the rated voltage. In this way, the first association relationship between the output voltage of the inverter and the apparent power of the inverter is adjusted based on the second association relationship between the output voltage of the inverter and the apparent power of the load, to improve control efficiency and accuracy. In addition, the output voltage is controlled by controlling the output current. Compared with directly controlling the output voltage, this can further improve operation stability of the load. After the on-grid/off-grid mode switch sends the disconnection complete message to the controller, the controller may send the switching instruction to the inverter. After receiving the switching instruction and determining that the inverter operates stably and the output voltage meets the preset range of the rated voltage, the inverter may switch to the voltage source mode, to implement on-grid/off-grid mode switching. This further improves operation stability of the load.

It should be noted that, for ease of description, the foregoing method embodiments are described as a series of combinations of actions. However, a person skilled in the art should be aware that this application is not limited to the described order of the actions, because some steps may be performed in another order or simultaneously according to this application.

A sequence of the steps of the method in embodiments of this application may be adjusted, combined, or removed according to an actual requirement.

Implementations of this application may be randomly combined, to achieve different technical effect.

It can be clearly understood by a person skilled in the art that, for ease and brevity of description, for detailed operating processes of the foregoing apparatuses and units, reference may be made to corresponding processes in the foregoing method embodiments, and details are not described herein again.

In addition, functional units in embodiments of this application may be integrated into one processing unit, or each of the units may be physically included alone, or two or more units may be integrated into one unit. The integrated unit may be implemented in a form of hardware, or may be implemented in a form of hardware in combination with a software functional unit.

Embodiments in this specification are described in a progressive manner. Each embodiment focuses on a difference from other embodiments. For same or similar parts in embodiments, mutual reference may be made between the embodiments. The method disclosed in the embodiments corresponds to the apparatus disclosed in the embodiments, and therefore is briefly described. For related parts, refer to the descriptions of the apparatus.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the processes or functions according to this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible to the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

In conclusion, the foregoing descriptions are merely embodiments of technical solutions of this application, but are not intended to limit the protection scope of this application. Any modification, equivalent replacement, or improvement made based on the disclosure of this application shall fall within the protection scope of this application. The invention is defined by the features of the independent claims. Preferred embodiments are defined in the dependent claims.

**Claims**

1. An energy storage system, wherein the energy storage system comprises a controller (101), an inverter (103) and an on-grid/off-grid mode switch (102) that are connected to the controller (101), and a load (106) connected to the on-grid/off-grid mode switch (102), wherein

   the inverter (103) is configured to: in response to determining that the energy storage system is in an islanding state, send an islanding state message to the controller (101), freeze an output frequency of the inverter (103) based on a preset frequency, and control an output current of the inverter (103) based on an association relationship that an output voltage of the inverter (103) is negatively correlated with apparent power of the inverter (103), so that the output voltage of the inverter (103) meets a preset range of a rated voltage;
   the controller (101) is configured to send a disconnection instruction to the on-grid/off-grid mode switch (102) based on the islanding state message, wherein the disconnection instruction instructs the on-grid/off-grid mode switch (102) to disconnect from a power grid (105) corresponding to the on-grid/off-grid mode switch (102);
   the controller (101) is further configured to send a switching instruction to the inverter (103) in response to receiving a disconnection complete message from the on-grid/off-grid mode switch (102), wherein the disconnection complete message indicates that the on-grid/off-grid mode switch (102) has been disconnected from the power grid (105), and the switching instruction instructs the inverter (103) to switch to a voltage source mode; and
   the inverter (103) is further configured to switch to the voltage source mode in response to receiving the switching instruction and determining that the output voltage of the inverter (103) meets the preset range of the rated voltage.

2. The energy storage system according to claim 1, wherein the inverter (103) is specifically configured to: control the output current of the inverter (103) based on a first association relationship that the output voltage of the inverter (103) is negatively correlated with the apparent power of the inverter (103), to obtain a first stable output voltage of the inverter (103) and first apparent power corresponding to the first stable output voltage, wherein a variation range of the first stable output voltage is less than or equal to the preset range; adjust the first association relationship based on a second association relationship that the output voltage of the inverter (103) is positively correlated with apparent power of the load (106), and a magnitude relationship between the first stable output voltage and the rated voltage, to obtain a third association relationship that the output voltage of the inverter (103) is negatively correlated with the apparent power of the inverter (103); and control the output current of the inverter (103) based on the third association relationship and the rated voltage, so that the output voltage of the inverter (103) meets the preset range of the rated voltage.

3. The energy storage system according to claim 2, wherein the inverter (103) is specifically configured to: adjust the first association relationship based on a magnitude relationship between the first stable output voltage and the rated voltage, to obtain a fourth association relationship that the output voltage of the inverter (103) is negatively correlated with the apparent power of the inverter (103); control the output current of the inverter (103) based on the fourth association relationship, to obtain a second stable output voltage of the inverter (103) and second apparent power corresponding to the second stable output voltage, wherein a variation range of the second stable output voltage is less than or equal to the preset range; obtain, based on the first stable output voltage, the first apparent power, the second stable output voltage, and the second apparent power, the second association relationship that the output voltage of the inverter (103) is positively correlated with the apparent power of the load (106); and adjust the fourth association relationship based on the second association relationship and the magnitude relationship between the first stable output voltage and the rated voltage, to obtain the third association relationship that the output voltage of the inverter (103) is negatively correlated with the apparent power of the inverter (103).

4. The energy storage system according to claim 2 or 3, wherein the inverter (103) is further configured to obtain the first association relationship based on a minimum output voltage and a maximum output voltage of the inverter (103) within the preset range of the rated voltage, maximum apparent power corresponding to the minimum output voltage, and minimum apparent power corresponding to the maximum output voltage.

5. The energy storage system according to claim 3, wherein the fourth association relationship indicates that when the first stable output voltage is less than the rated voltage, maximum apparent power corresponding to the inverter (103) within the preset range of the rated voltage in the fourth association relationship is greater than maximum apparent power corresponding to the inverter (103) within the preset range of the rated voltage in the first association relationship; or when the first stable output voltage is greater than or equal to the rated voltage, maximum apparent power corresponding to the inverter (103) within the preset range of the rated voltage in the fourth association relationship is less than maximum apparent power corresponding to the inverter (103) within the preset range of the rated voltage in the first association relationship.

6. The energy storage system according to claim 3, wherein the inverter (103) is specifically configured to: determine a value of an association coefficient in the fourth association relationship based on the second association relationship and the magnitude relationship between the first stable output voltage and the rated voltage; and update the fourth association relationship based on the value of the association coefficient, to obtain the third association relationship that the output voltage of the inverter (103) is negatively correlated with the apparent power of the inverter (103).

7. The energy storage system according to claim 2, wherein the inverter (103) is specifically configured to: obtain, based on the third association relationship, target apparent power corresponding to the rated voltage; and control the output current of the inverter (103) based on the target apparent power, so that the output voltage of the inverter (103) meets the preset range of the rated voltage.

8. The energy storage system according to any one of claims 1 to 7, wherein the preset frequency comprises a rated frequency of the load (106), or an output frequency of the inverter (103) in a case that the energy storage system is in the islanding state.

9. An on-grid/off-grid mode switching method, applied to an energy storage system, wherein the energy storage system comprises a controller (101), an inverter (103), an on-grid/off-grid mode switch (102), a power grid (105), and a load (106), and the method comprises:

in response to determining that the energy storage system is in an islanding state, sending, by the inverter (103), an islanding state message to the controller (101), freezing an output frequency of the inverter (103) based on a preset frequency, and controlling an output current of the inverter (103) based on an association relationship that an output voltage of the inverter (103) is negatively correlated with apparent power of the inverter (103), so that the output voltage of the inverter (103) meets a preset range of a rated voltage;

sending, by the controller (101), a disconnection instruction to the on-grid/off-grid mode switch (102), wherein the disconnection instruction instructs the on-grid/off-grid mode switch (102) to disconnect from the power grid (105);

sending, by the controller (101), a switching instruction to the inverter (103) in response to receiving a disconnection complete message from the on-grid/off-grid mode switch (102), wherein the disconnection complete message indicates that the on-grid/off-grid mode switch (102) has been disconnected from the power grid (105), and the switching instruction instructs the inverter (103) to switch to a voltage source mode; and

switching, by the inverter (103), to the voltage source mode in response to receiving the switching instruction and determining that the output voltage of the inverter (103) meets the preset range of the rated voltage.

10. The method according to claim 9, wherein the controlling an output current of the inverter (103) based on an association relationship that an output voltage of the inverter (103) is negatively correlated with apparent power of the inverter (103) comprises:

controlling, by the inverter (103), the output current of the inverter (103) based on a first association relationship that the output voltage of the inverter (103) is negatively correlated with the apparent power of the inverter (103), to obtain a first stable output voltage of the inverter (103) and first apparent power corresponding to the first stable output voltage, wherein a variation range of the first stable output voltage is less than or equal to the preset range.

11. The method according to claim 10, wherein the method further comprises: adjusting, by the inverter (103), the first association relationship based on a second association relationship that the output voltage of the inverter (103) is positively correlated with apparent power of the load (106), and a magnitude relationship between the first stable output voltage and the rated voltage, to obtain a third association relationship that the output voltage of the inverter (103) is negatively correlated with the apparent power of the inverter (103); and

controlling, by the inverter (103), the output current of the inverter (103) based on the third association relationship and the rated voltage, so that the output voltage of the inverter (103) meets the preset range of the rated voltage.

12. The method according to claim 11, wherein the adjusting the first association relationship based on a second association relationship that the output voltage of the inverter (103) is positively correlated with apparent power of the load (106), and a magnitude relationship between the first stable output voltage and the rated voltage, to obtain a third association relationship that the output voltage of the inverter (103) is negatively correlated with the apparent power of the inverter (103) comprises:

adjusting, by the inverter (103), the first association relationship based on a magnitude relationship between the first stable output voltage and the rated voltage, to obtain a fourth association relationship that the output voltage of the inverter (103) is negatively correlated with the apparent power of the inverter (103); and

controlling, by the inverter (103), the output current of the inverter (103) based on the fourth association relationship, to obtain a second stable output voltage of the inverter (103) and second apparent power corresponding to the second stable output voltage, wherein a variation range of the second stable output voltage is less than or equal to the preset range.

13. The method according to claim 12, wherein the method further comprises:

obtaining, by the inverter (103) based on the first stable output voltage, the first apparent power, the second stable output voltage, and the second apparent power, the second association relationship that the output voltage of the inverter (103) is positively correlated with the apparent power of the load (106); and

adjusting, by the inverter (103), the fourth association relationship based on the second association relationship and the magnitude relationship between the first stable output voltage and the rated voltage, to obtain the third association relationship that the output voltage of the inverter (103) is negatively correlated with the apparent power of the inverter (103).

14. The method according to any one of claims 9 to 13, wherein before the controlling the output current of the inverter (103) based on a first association relationship that the output voltage of the inverter (103) is negatively correlated with the apparent power of the inverter (103), the method further comprises:

obtaining, by the inverter (103), the first association relationship based on a minimum output voltage and a maximum output voltage of the inverter (103) within the preset range of the rated voltage, maximum apparent power corresponding to the minimum output voltage, and minimum apparent power corresponding to the maximum output voltage.

**15.** The method according to claim 14, wherein the fourth association relationship indicates that when the first stable output voltage is less than the rated voltage, maximum apparent power corresponding to the inverter (103) within the preset range of the rated voltage in the fourth association relationship is greater than maximum apparent power corresponding to the inverter (103) within the preset range of the rated voltage in the first association relationship; or when the first stable output voltage is greater than or equal to the rated voltage, maximum apparent power corresponding to the inverter (103) within the preset range of the rated voltage in the fourth association relationship is less than maximum apparent power corresponding to the inverter (103) within the preset range of the rated voltage in the first association relationship.

**Patentansprüche**

**1.** Energiespeichersystem, wobei das Energiespeichersystem eine Steuerung (101), einen Wechselrichter (103) und einen Schalter (102) für den netzgebundenen/netzfreien Modus, der mit der Steuerung (101) verbunden ist, und eine Last (106), die mit dem Schalter (102) für den netzgebundenen/netzfreien Modus verbunden ist, umfasst, wobei

der Wechselrichter (103) zu Folgendem konfiguriert ist: als Reaktion auf Feststellen, dass sich das Energiespeichersystem in einem Inselbildungszustand befindet, Senden einer Inselbildungszustandsnachricht an die Steuerung (101), Einfrieren einer Ausgangsfrequenz des Wechselrichters (103) auf der Grundlage einer voreingestellten Frequenz und Steuern eines Ausgangsstroms des Wechselrichters (103) auf der Grundlage einer Zuordnungsbeziehung, dass eine Ausgangsspannung des Wechselrichters (103) negativ mit der Scheinleistung des Wechselrichters (103) korreliert ist, so dass die Ausgangsspannung des Wechselrichters (103) einen voreingestellten Bereich einer Nennspannung erfüllt;
die Steuerung (101) dazu konfiguriert ist, auf der Grundlage der Inselbildungszustandsnachricht eine Trennungsanweisung an den Schalter (102) für den netzgebundenen/netzfreien Modus zu senden, wobei die Trennungsanweisung den Schalter (102) für den netzgebundenen/netzfreien Modus dazu anweist, sich von einem Stromnetz (105) zu trennen, das dem Schalter (102) für den netzgebundenen/netzfreien Modus entspricht;
die Steuerung (101) ferner dazu konfiguriert ist, eine Umschaltanweisung an den Wechselrichter (103) als Reaktion auf Empfangen einer Trennungsfertigstellungsnachricht von dem Schalter (102) für den netzgebundenen/netzfreien Modus zu senden, wobei die Trennungsfertigstellungsnachricht anzeigt, dass der Schalter (102) für den netzgebundenen/netzfreien Modus von dem Stromnetz (105) getrennt worden ist, und die Umschaltanweisung den Wechselrichter (103) dazu anweist, in einen Spannungsquellenmodus umzuschalten; und
der Wechselrichter (103) ferner dazu konfiguriert ist, als Reaktion auf Empfangen der Umschaltanweisung und Feststellen, dass die Ausgangsspannung des Wechselrichters (103) den voreingestellten Bereich der Nennspannung erfüllt, in den Spannungsquellenmodus umzuschalten.

**2.** Energiespeichersystem nach Anspruch 1, wobei der Wechselrichter (103) speziell zu Folgendem konfiguriert ist: Steuern des Ausgangsstroms des Wechselrichters (103) auf der Grundlage einer ersten Zuordnungsbeziehung, dass die Ausgangsspannung des Wechselrichters (103) negativ mit der Scheinleistung des Wechselrichters (103) korreliert ist, um eine erste stabile Ausgangsspannung des Wechselrichters (103) und eine erste Scheinleistung, die der ersten stabilen Ausgangsspannung entspricht, zu erlangen, wobei ein Variationsbereich der ersten stabilen Ausgangsspannung kleiner als oder gleich dem voreingestellten Bereich ist; Anpassen der ersten Zuordnungsbeziehung auf der Grundlage einer zweiten Zuordnungsbeziehung, dass die Ausgangsspannung des Wechselrichters (103) positiv mit der Scheinleistung der Last (106) korreliert ist, und einer Größenbeziehung zwischen der ersten stabilen Ausgangsspannung und der Nennspannung, um eine dritte Zuordnungsbeziehung, dass die Ausgangsspannung des Wechselrichters (103) negativ mit der Scheinleistung des Wechselrichters (103) korreliert ist, zu erlangen; und Steuern des Ausgangsstroms des Wechselrichters (103) auf der Grundlage der dritten Zuordnungsbeziehung und der Nennspannung, so dass die Ausgangsspannung des Wechselrichters (103) den voreingestellten Bereich der Nennspannung erfüllt.

**3.** Energiespeichersystem nach Anspruch 2, wobei der Wechselrichter (103) speziell zu Folgendem konfiguriert ist: Anpassen der ersten Zuordnungsbeziehung auf der Grundlage einer Größenbeziehung zwischen der ersten stabilen Ausgangsspannung und der Nennspannung, um eine vierte Zuordnungsbeziehung, dass die Ausgangsspannung des Wechselrichters (103) negativ mit der Scheinleistung des Wechselrichters (103) korreliert ist, zu erlangen; Steuern des Ausgangsstroms des Wechselrichters (103) auf der Grundlage der vierten Zuordnungsbeziehung, um eine zweite stabile Ausgangsspannung des Wechselrichters (103) und eine zweite Scheinleistung zu erlangen, die der zweiten stabilen Ausgangsspannung entspricht, wobei ein Variationsbereich der zweiten stabilen Ausgangsspannung kleiner als oder gleich dem voreingestellten Bereich ist; Erlangen, auf der Grundlage der ersten stabilen Ausgangsspannung, der ersten Scheinleistung, der zweiten stabilen Ausgangsspannung und der zweiten Scheinleistung, der zweiten Zuordnungsbeziehung, dass die Ausgangsspannung des Wechselrichters (103) positiv mit der Scheinleistung der Last (106) korreliert ist; und Anpassen der vierten Zuordnungsbeziehung auf der Grundlage der zweiten Zuordnungsbeziehung und der Größenbeziehung zwischen der ersten stabilen Ausgangsspannung und der Nennspannung, um die dritte Zuordnungsbeziehung, dass die Ausgangsspannung des Wechselrichters (103) negativ mit der Scheinleistung des Wechselrichters (103) korreliert ist, zu erlangen.

4. Energiespeichersystem nach Anspruch 2 oder 3, wobei der Wechselrichter (103) ferner dazu konfiguriert ist, die erste Zuordnungsbeziehung auf der Grundlage einer minimalen Ausgangsspannung und einer maximalen Ausgangsspannung des Wechselrichters (103) innerhalb des voreingestellten Bereichs der Nennspannung zu erlangen, wobei eine maximale Scheinleistung der minimalen Ausgangsspannung entspricht und eine minimale Scheinleistung der maximalen Ausgangsspannung entspricht.

5. Energiespeichersystem nach Anspruch 3, wobei die vierte Zuordnungsbeziehung anzeigt, dass, wenn die erste stabile Ausgangsspannung kleiner als die Nennspannung ist, eine maximale Scheinleistung, die dem Wechselrichter (103) innerhalb des voreingestellten Bereichs der Nennspannung in der vierten Zuordnungsbeziehung entspricht, größer ist als eine maximale Scheinleistung, die dem Wechselrichter (103) innerhalb des voreingestellten Bereichs der Nennspannung in der ersten Zuordnungsbeziehung entspricht; oder wenn die erste stabile Ausgangsspannung größer als oder gleich der Nennspannung ist, eine maximale Scheinleistung, die dem Wechselrichter (103) innerhalb des voreingestellten Bereichs der Nennspannung in der vierten Zuordnungsbeziehung entspricht, kleiner ist als eine maximale Scheinleistung, die dem Wechselrichter (103) innerhalb des voreingestellten Bereichs der Nennspannung in der ersten Zuordnungsbeziehung entspricht.

6. Energiespeichersystem nach Anspruch 3, wobei der Wechselrichter (103) speziell zu Folgendem konfiguriert ist: Feststellen eines Werts eines Zuordnungskoeffizienten in der vierten Zuordnungsbeziehung auf der Grundlage der zweiten Zuordnungsbeziehung und der Größenbeziehung zwischen der ersten stabilen Ausgangsspannung und der Nennspannung; und Aktualisieren der vierten Zuordnungsbeziehung auf der Grundlage des Werts des Zuordnungskoeffizienten, um die dritte Zuordnungsbeziehung, dass die Ausgangsspannung des Wechselrichters (103) negativ mit der Scheinleistung des Wechselrichters (103) korreliert ist, zu erlangen.

7. Energiespeichersystem nach Anspruch 2, wobei der Wechselrichter (103) speziell zu Folgendem konfiguriert ist: Erlangen auf der Grundlage der dritten Zuordnungsbeziehung einer Zielscheinleistung, die der Nennspannung entspricht; und Steuern des Ausgangsstroms des Wechselrichters (103) auf der Grundlage der Zielscheinleistung, so dass die Ausgangsspannung des Wechselrichters (103) den voreingestellten Bereich der Nennspannung erfüllt.

8. Energiespeichersystem nach einem der Ansprüche 1 bis 7, wobei die voreingestellte Frequenz eine Nennfrequenz der Last (106) oder eine Ausgangsfrequenz des Wechselrichters (103) für den Fall umfasst, dass sich das Energiespeichersystem in dem Inselbildungszustand befindet.

9. Verfahren zum Umschalten eines netzgebundenen/netzfreien Modus, das auf ein Energiespeichersystem angewandt wird, wobei das Energiespeichersystem eine Steuerung (101), einen Wechselrichter (103), einen Schalter (102) für den netzgebundenen/netzfreien Modus, ein Stromnetz (105) und eine Last (106) umfasst und das Verfahren Folgendes umfasst:

als Reaktion auf Feststellen, dass sich das Energiespeichersystem in einem Inselbildungszustand befindet, Senden, durch den Wechselrichter (103), einer Inselbildungszustandsnachricht an die Steuerung (101), Einfrieren einer Ausgangsfrequenz des Wechselrichters (103) auf der Grundlage einer voreingestellten Frequenz und Steuern eines Ausgangsstroms des Wechselrichters (103) auf der Grundlage einer Zuordnungsbeziehung, dass eine Ausgangsspannung des Wechselrichters (103) negativ mit der Scheinleistung des Wechselrichters (103) korreliert ist, so dass die Ausgangsspannung des Wechselrichters (103) einen voreingestellten Bereich einer Nennspannung erfüllt;
Senden, durch die Steuerung (101), einer Trennungsanweisung an den Schalter (102) für den netzgebundenen/netzfreien Modus, wobei die Trennungsanweisung den Schalter (102) für den netzgebundenen/netzfreien Modus dazu anweist, sich von dem Stromnetz (105) zu trennen;
Senden, durch die Steuerung (101), einer Umschaltanweisung an den Wechselrichter (103) als Reaktion auf Empfangen einer Trennungsfertigstellungsnachricht von dem Schalter (102) für den netzgebundenen/netzfreien Modus, wobei die Trennungsfertigstellungsnachricht anzeigt, dass der Schalter (102) für den netzgebundenen/netzfreien Modus von dem Stromnetz (105) getrennt worden ist, und die Umschaltanweisung den Wechselrichter (103) dazu anweist, in einen Spannungsquellenmodus umzuschalten; und

Umschalten, durch den Wechselrichter (103), in den Spannungsquellenmodus als Reaktion auf Empfangen der Umschaltanweisung und Feststellen, dass die Ausgangsspannung des Wechselrichters (103) den voreingestellten Bereich der Nennspannung erfüllt.

10. Verfahren nach Anspruch 9, wobei das Steuern eines Ausgangsstroms des Wechselrichters (103) auf der Grundlage einer Zuordnungsbeziehung, dass eine Ausgangsspannung des Wechselrichters (103) negativ mit der Scheinleistung des Wechselrichters (103) korreliert ist, Folgendes umfasst:

Steuern, durch den Wechselrichter (103), des Ausgangsstroms des Wechselrichters (103) auf der Grundlage einer ersten Zuordnungsbeziehung, dass die Ausgangsspannung des Wechselrichters (103) negativ mit der Scheinleistung des Wechselrichters (103) korreliert ist, um eine erste stabile Ausgangsspannung des Wechselrichters (103) und eine erste Scheinleistung, die der ersten stabilen Ausgangsspannung entspricht, zu erlangen, wobei ein Variationsbereich der ersten stabilen Ausgangsspannung kleiner als oder gleich dem voreingestellten Bereich ist.

11. Verfahren nach Anspruch 10, wobei das Verfahren ferner Folgendes umfasst: Anpassen, durch den Wechselrichter (103), der ersten Zuordnungsbeziehung auf der Grundlage einer zweiten Zuordnungsbeziehung, dass die Ausgangsspannung des Wechselrichters (103) positiv mit der Scheinleistung der Last (106) korreliert ist, und einer Größenbeziehung zwischen der ersten stabilen Ausgangsspannung und der Nennspannung, um eine dritte Zuordnungsbeziehung, dass die Ausgangsspannung des Wechselrichters (103) negativ mit der Scheinleistung des Wechselrichters (103) korreliert ist, zu erlangen; und

Steuern, durch den Wechselrichter (103), des Ausgangsstroms des Wechselrichters (103) auf der Grundlage der dritten Zuordnungsbeziehung und der Nennspannung, so dass die Ausgangsspannung des Wechselrichters (103) den voreingestellten Bereich der Nennspannung erfüllt.

12. Verfahren nach Anspruch 11, wobei das Anpassen der ersten Zuordnungsbeziehung auf der Grundlage einer zweiten Zuordnungsbeziehung, dass die Ausgangsspannung des Wechselrichters (103) positiv mit der Scheinleistung der Last (106) korreliert ist, und einer Größenbeziehung zwischen der ersten stabilen Ausgangsspannung und der Nennspannung, um eine dritte Zuordnungsbeziehung, dass die Ausgangsspannung des Wechselrichters (103) negativ mit der Scheinleistung des Wechselrichters (103) korreliert ist, zu erlangen, Folgendes umfasst:

Anpassen, durch den Wechselrichter (103), der ersten Zuordnungsbeziehung auf der Grundlage einer Größenbeziehung zwischen der ersten stabilen Ausgangsspannung und der Nennspannung, um eine vierte Zuordnungsbeziehung, dass die Ausgangsspannung des Wechselrichters (103) negativ mit der Scheinleistung des Wechselrichters (103) korreliert ist, zu erlangen; und

Steuern, durch den Wechselrichter (103), des Ausgangsstroms des Wechselrichters (103) auf der Grundlage der vierten Zuordnungsbeziehung, um eine zweite stabile Ausgangsspannung des Wechselrichters (103) und eine zweite Scheinleistung, die der zweiten stabilen Ausgangsspannung entspricht, zu erlangen, wobei ein Variationsbereich der zweiten stabilen Ausgangsspannung kleiner als oder gleich dem voreingestellten Bereich ist.

13. Verfahren nach Anspruch 12, wobei das Verfahren ferner Folgendes umfasst:

Erlangen, durch den Wechselrichter (103), auf der Grundlage der ersten stabilen Ausgangsspannung, der ersten Scheinleistung, der zweiten stabilen Ausgangsspannung und der zweiten Scheinleistung, der zweiten Zuordnungsbeziehung, dass die Ausgangsspannung des Wechselrichters (103) positiv mit der Scheinleistung der Last (106) korreliert ist; und

Anpassen, durch den Wechselrichter (103), der vierten Zuordnungsbeziehung auf der Grundlage der zweiten Zuordnungsbeziehung und der Größenbeziehung zwischen der ersten stabilen Ausgangsspannung und der Nennspannung, um die dritte Zuordnungsbeziehung, dass die Ausgangsspannung des Wechselrichters (103) negativ mit der Scheinleistung des Wechselrichters (103) korreliert ist, zu erlangen.

14. Verfahren nach einem der Ansprüche 9 bis 13, wobei das Verfahren vor dem Steuern des Ausgangsstroms des Wechselrichters (103) auf der Grundlage einer ersten Zuordnungsbeziehung, dass die Ausgangsspannung des Wechselrichters (103) negativ mit der Scheinleistung des Wechselrichters (103) korreliert ist, ferner Folgendes umfasst:

Erlangen, durch den Wechselrichter (103), der ersten Zuordnungsbeziehung auf der Grundlage einer minimalen Ausgangsspannung und einer maximalen Ausgangsspannung des Wechselrichters (103) innerhalb des voreingestellten Bereichs der Nennspannung, wobei eine maximale Scheinleistung der minimalen Ausgangsspannung entspricht und eine minimale Scheinleistung der maximalen Ausgangsspannung entspricht.

**15.** Verfahren nach Anspruch 14, wobei die vierte Zuordnungsbeziehung anzeigt, dass, wenn die erste stabile Ausgangsspannung kleiner als die Nennspannung ist, eine maximale Scheinleistung, die dem Wechselrichter (103) innerhalb des voreingestellten Bereichs der Nennspannung in der vierten Zuordnungsbeziehung entspricht, größer ist als eine maximale Scheinleistung, die dem Wechselrichter (103) innerhalb des voreingestellten Bereichs der Nennspannung in der ersten Zuordnungsbeziehung entspricht; oder wenn die erste stabile Ausgangsspannung größer als oder gleich der Nennspannung ist, eine maximale Scheinleistung, die dem Wechselrichter (103) innerhalb des voreingestellten Bereichs der Nennspannung in der vierten Zuordnungsbeziehung entspricht, kleiner ist als eine maximale Scheinleistung, die dem Wechselrichter (103) innerhalb des voreingestellten Bereichs der Nennspannung in der ersten Zuordnungsbeziehung entspricht.

**Revendications**

**1.** Système de stockage d'énergie, dans lequel le système de stockage d'énergie comprend un dispositif de commande (101), un onduleur (103) et un commutateur de mode réseau/hors réseau (102) connectés au dispositif de commande (101), et une charge (106) connectée au commutateur de mode réseau/hors réseau (102), dans lequel

l'onduleur (103) est configuré pour : en réponse à la détermination que le système de stockage d'énergie est dans un état d'îlotage, envoyer un message d'état d'îlotage au dispositif de commande (101), geler une fréquence de sortie de l'onduleur (103) sur la base d'une fréquence prédéfinie, et commander un courant de sortie de l'onduleur (103) sur la base d'une relation d'association selon laquelle une tension de sortie de l'onduleur (103) est corrélée négativement avec la puissance apparente de l'onduleur (103), de sorte que la tension de sortie de l'onduleur (103) correspond à une plage prédéfinie d'une tension nominale ;
le dispositif de commande (101) est configuré pour envoyer une instruction de déconnexion au commutateur de mode réseau/hors réseau (102) sur la base du message d'état d'îlotage, dans lequel l'instruction de déconnexion ordonne au commutateur de mode réseau/hors réseau (102) de se déconnecter d'un réseau électrique (105) correspondant au commutateur de mode réseau/hors réseau (102) ;
le dispositif de commande (101) est également configuré pour envoyer une instruction de commutation à l'onduleur (103) en réponse à la réception d'un message de déconnexion complète provenant du commutateur de mode réseau/hors réseau (102), dans lequel le message de déconnexion complète indique que le commutateur de mode réseau/hors réseau (102) a été déconnecté du réseau électrique (105), et l'instruction de commutation ordonne à l'onduleur (103) de commuter vers un mode source de tension ; et
l'onduleur (103) est également configuré pour commuter vers le mode source de tension en réponse à la réception de l'instruction de commutation et à la détermination que la tension de sortie de l'onduleur (103) correspond à la plage prédéfinie de la tension nominale.

**2.** Système de stockage d'énergie selon la revendication 1, dans lequel l'onduleur (103) est spécifiquement configuré pour : commander le courant de sortie de l'onduleur (103) sur la base d'une première relation d'association selon laquelle la tension de sortie de l'onduleur (103) est corrélée négativement à la puissance apparente de l'onduleur (103), afin d'obtenir une première tension de sortie stable de l'onduleur (103) et une première puissance apparente correspondant à la première tension de sortie stable, dans lequel une plage de variation de la première tension de sortie stable est inférieure ou égale à la plage prédéfinie ; ajuster la première relation d'association sur la base d'une deuxième relation d'association selon laquelle la tension de sortie de l'onduleur (103) est corrélée positivement à la puissance apparente de la charge (106), et d'une relation d'amplitude entre la première tension de sortie stable et la tension nominale, afin d'obtenir une troisième relation d'association selon laquelle la tension de sortie de l'onduleur (103) est corrélée négativement à la puissance apparente de l'onduleur (103) ; et commander le courant de sortie de l'onduleur (103) sur la base de la troisième relation d'association et de la tension nominale, de sorte que la tension de sortie de l'onduleur (103) correspond à la plage prédéfinie de la tension nominale.

**3.** Système de stockage d'énergie selon la revendication 2, dans lequel l'onduleur (103) est spécifiquement configuré pour : ajuster la première relation d'association sur la base d'une relation d'amplitude entre la première tension de sortie stable et la tension nominale, afin d'obtenir une quatrième relation d'association selon laquelle la tension de sortie de l'onduleur (103) est corrélée négativement à la puissance apparente de l'onduleur (103) ; commander le courant de sortie de l'onduleur (103) sur la base de la quatrième relation d'association, afin d'obtenir une seconde tension de sortie stable de l'onduleur (103) et une seconde puissance apparente correspondant à la seconde tension de sortie stable, dans lequel une plage de variation de la seconde tension de sortie stable est inférieure ou égale à la plage prédéfinie ; obtenir, sur la base de la première tension de sortie stable, de la première puissance apparente, de la seconde tension de sortie stable et de la seconde puissance apparente, la deuxième relation d'association selon laquelle la tension de sortie de l'onduleur (103) est corrélée positivement à la puissance apparente de la charge (106) ; et ajuster la quatrième relation d'association sur la base de la deuxième relation d'association et de la relation d'amplitude entre la première tension de sortie stable et la tension nominale, pour obtenir la troisième relation d'association selon laquelle la tension de sortie de l'onduleur (103) est corrélée négativement avec la puissance apparente de l'onduleur (103).

4. Système de stockage d'énergie selon la revendication 2 ou 3, dans lequel l'onduleur (103) est également configuré pour obtenir la première relation d'association sur la base d'une tension de sortie minimale et d'une tension de sortie maximale de l'onduleur (103) dans la plage prédéfinie de la tension nominale, de la puissance apparente maximale correspondant à la tension de sortie minimale et de la puissance apparente minimale correspondant à la tension de sortie maximale.

5. Système de stockage d'énergie selon la revendication 3, dans lequel la quatrième relation d'association indique que lorsque la première tension de sortie stable est inférieure à la tension nominale, la puissance apparente maximale correspondant à l'onduleur (103) dans la plage prédéfinie de la tension nominale dans la quatrième relation d'association est supérieure à la puissance apparente maximale correspondant à l'onduleur (103) dans la plage prédéfinie de la tension nominale dans la première relation d'association ; ou lorsque la première tension de sortie stable est supérieure ou égale à la tension nominale, la puissance apparente maximale correspondant à l'onduleur (103) dans la plage prédéfinie de la tension nominale dans la quatrième relation d'association est inférieure à la puissance apparente maximale correspondant à l'onduleur (103) dans la plage prédéfinie de la tension nominale dans la première relation d'association.

6. Système de stockage d'énergie selon la revendication 3, dans lequel l'onduleur (103) est spécifiquement configuré pour : déterminer une valeur d'un coefficient d'association dans la quatrième relation d'association sur la base de la deuxième relation d'association et de la relation d'amplitude entre la première tension de sortie stable et la tension nominale ; et mettre à jour la quatrième relation d'association sur la base de la valeur du coefficient d'association, pour obtenir la troisième relation d'association selon laquelle la tension de sortie de l'onduleur (103) est corrélée négativement à la puissance apparente de l'onduleur (103).

7. Système de stockage d'énergie selon la revendication 2, dans lequel l'onduleur (103) est spécifiquement configuré pour : obtenir, sur la base de la troisième relation d'association, une puissance apparente cible correspondant à la tension nominale ; et commander le courant de sortie de l'onduleur (103) sur la base de la puissance apparente cible, de sorte que la tension de sortie de l'onduleur (103) correspond à la plage prédéfinie de la tension nominale.

8. Système de stockage d'énergie selon l'une quelconque des revendications 1 à 7, dans lequel la fréquence prédéfinie comprend une fréquence nominale de la charge (106), ou une fréquence de sortie de l'onduleur (103) dans un cas où le système de stockage d'énergie est dans l'état d'îlotage.

9. Procédé de commutation de mode réseau/hors réseau, appliqué à un système de stockage d'énergie, dans lequel le système de stockage d'énergie comprend un dispositif de commande (101), un onduleur (103), un commutateur de mode réseau/hors réseau (102), un réseau électrique (105) et une charge (106), et le procédé comprend :

en réponse à la détermination que le système de stockage d'énergie est dans un état d'îlotage, l'envoi, par l'onduleur (103), d'un message d'état d'îlotage au dispositif de commande (101), le gel d'une fréquence de sortie de l'onduleur (103) sur la base d'une fréquence prédéfinie, et la commande d'un courant de sortie de l'onduleur (103) sur la base d'une relation d'association selon laquelle une tension de sortie de l'onduleur (103) est corrélée négativement avec la puissance apparente de l'onduleur (103), de sorte que la tension de sortie de l'onduleur (103) correspond à une plage prédéfinie d'une tension nominale ; l'envoi, par le dispositif de commande (101), d'une instruction de déconnexion au commutateur de mode réseau/hors réseau (102), dans lequel l'instruction de déconnexion ordonne au commutateur de mode réseau/-hors réseau (102) de se déconnecter du réseau électrique (105) ; l'envoi, par le dispositif de commande (101), d'une instruction de commutation à l'onduleur (103) en réponse à la réception d'un message de déconnexion complète provenant du commutateur de mode réseau/hors réseau (102), dans lequel le message de déconnexion complète indique que le commutateur de mode réseau/hors réseau (102) a été déconnecté du réseau électrique (105), et l'instruction de commutation ordonne à l'onduleur (103) de commuter vers un mode source de tension ; et la commutation, par l'onduleur (103), vers le mode source de tension en réponse à la réception de l'instruction de commutation et à la détermination que la tension de sortie de l'onduleur (103) correspond à la plage prédéfinie de la tension nominale.

10. Procédé selon la revendication 9, dans lequel la commande d'un courant de sortie de l'onduleur (103) sur la base d'une relation d'association selon laquelle la tension de sortie de l'onduleur (103) est corrélée négativement à la puissance apparente de l'onduleur (103) comprend :
la commande, par l'onduleur (103), du courant de sortie de l'onduleur (103) sur la base d'une première relation d'association selon laquelle la tension de sortie de l'onduleur (103) est corrélée négativement avec la puissance apparente de l'onduleur (103), pour obtenir une première tension de sortie stable de l'onduleur (103) et une première puissance apparente correspondant à la première tension de sortie stable, dans lequel une plage de variation de la première tension de sortie stable est inférieure ou égale à la plage prédéfinie.

11. Procédé selon la revendication 10, dans lequel le procédé comprend également : l'ajustement, par l'onduleur (103), de la première relation d'association sur la base d'une deuxième relation d'association selon laquelle la tension de sortie de l'onduleur (103) est corrélée positivement à la puissance apparente de la charge (106), et d'une relation d'amplitude entre la première tension de sortie stable et la tension nominale, pour obtenir une troisième relation d'association selon laquelle la tension de sortie de l'onduleur (103) est corrélée négativement à la puissance apparente de l'onduleur (103) ; et
la commande, par l'onduleur (103), du courant de sortie de l'onduleur (103) sur la base de la troisième relation d'association et de la tension nominale, de sorte que la tension de sortie de l'onduleur (103) correspond à la plage prédéfinie de la tension nominale.

12. Procédé selon la revendication 11, dans lequel l'ajustement de la première relation d'association sur la base d'une deuxième relation d'association selon laquelle la tension de sortie de l'onduleur (103) est corrélée positivement à la puissance apparente de la charge (106), et d'une relation d'amplitude entre la première tension de sortie stable et la tension nominale, pour obtenir une troisième relation d'association selon laquelle la tension de sortie de l'onduleur (103) est corrélée négativement à la puissance apparente de l'onduleur (103) comprend :

l'ajustement, par l'onduleur (103), de la première relation d'association sur la base d'une relation d'amplitude entre la première tension de sortie stable et la tension nominale, pour obtenir une quatrième relation d'association selon laquelle la tension de sortie de l'onduleur (103) est corrélée négativement à la puissance apparente de l'onduleur (103) ; et
la commande, par l'onduleur (103), du courant de sortie de l'onduleur (103) sur la base de la quatrième relation d'association, pour obtenir une seconde tension de sortie stable de l'onduleur (103) et une seconde puissance apparente correspondant à la seconde tension de sortie stable, dans lequel une plage de variation de la seconde tension de sortie stable est inférieure ou égale à la plage prédéfinie.

13. Procédé selon la revendication 12, dans lequel le procédé comprend également :

l'obtention, par l'onduleur (103) sur la base de la première tension de sortie stable, de la première puissance apparente, de la seconde tension de sortie stable, et de la seconde puissance apparente, de la deuxième relation d'association selon laquelle la tension de sortie de l'onduleur (103) est corrélée positivement à la puissance apparente de la charge (106) ; et
l'ajustement, par l'onduleur (103), de la quatrième relation d'association sur la base de la deuxième relation d'association et de la relation d'amplitude entre la première tension de sortie stable et la tension nominale, pour obtenir la troisième relation d'association selon laquelle la tension de sortie de l'onduleur (103) est corrélée négativement à la puissance apparente de l'onduleur (103).

14. Procédé selon l'une quelconque des revendications 9 à 13, dans lequel, avant de commander le courant de sortie de l'onduleur (103) sur la base d'une première relation d'association selon laquelle la tension de sortie de l'onduleur (103) est corrélée négativement à la puissance apparente de l'onduleur (103), le procédé comprend également :
l'obtention, par l'onduleur (103), de la première relation d'association sur la base d'une tension de sortie minimale et d'une tension de sortie maximale de l'onduleur (103) dans la plage prédéfinie de la tension nominale, de la puissance apparente maximale correspondant à la tension de sortie minimale et de la puissance apparente minimale correspondant à la tension de sortie maximale.

15. Procédé selon la revendication 14, dans lequel la quatrième relation d'association indique que lorsque la première tension de sortie stable est inférieure à la tension nominale, la puissance apparente maximale correspondant à l'onduleur (103) dans la plage prédéfinie de la tension nominale dans la quatrième relation d'association est supérieure à la puissance apparente maximale correspondant à l'onduleur (103) dans la plage prédéfinie de la tension nominale dans la première relation d'association ; ou lorsque la première tension de sortie stable est supérieure ou égale à la tension nominale, la puissance apparente maximale correspondant à l'onduleur (103) dans la plage prédéfinie de la tension nominale dans la quatrième relation d'association est inférieure à la puissance apparente maximale correspondant à l'onduleur (103) dans la plage prédéfinie de la tension nominale dans la première relation d'association.

100

Energy storage system

| 104 | 103 | 101 | 105 |
|---|---|---|---|
| Energy storage subsystem | Inverter | Controller | Power grid |

| 102 | 106 |
|---|---|
| On-grid/ Off-grid mode switch | Load |

FIG. 1

103

Inverter

| 109 | 108 |
|---|---|
| Control circuit | Sampling circuit |

| 107 | 110 |
|---|---|
| Inverter circuit | Storage circuit |

FIG. 2

FIG. 3

FIG. 4

FIG. 5

S (U$_{rlc}$)

FIG. 6

S (U$_{rlc}$)

FIG. 7

FIG. 8

| Inverter | Controller | On-grid/Off-grid mode switch |
|---|---|---|

Determine whether an energy storage system is in an islanding state    S901

Yes    Islanding state message    S902

Disconnection instruction    S905

Freeze a frequency of the inverter based on a preset frequency    S903

The inverter controls an output current of the inverter based on an association relationship that an output voltage of the inverter is negatively correlated with apparent power of the inverter, so that the output voltage of the inverter meets a preset range of a rated voltage    S904

Disconnection complete message    S906

Switching instruction    S907

Switch to a voltage source mode    S908

FIG. 9

| Inverter | Controller | On-grid/Off-grid mode switch |
|---|---|---|

Determine whether an energy storage system is in an islanding state — S1001

Yes   Islanding state message — S1002

Disconnection instruction — S1007

Freeze a frequency of the inverter based on a preset frequency — S1003

The inverter controls an output current of the inverter based on a first association relationship that an output voltage of the inverter is negatively correlated with apparent power of the inverter, to obtain a first stable output voltage of the inverter and first apparent power corresponding to the first stable output voltage — S1004

Disconnection complete message — S1008

The inverter adjusts a second association relationship based on the second association relationship that the output voltage of the inverter is positively correlated with apparent power of a load, and a magnitude relationship between the first stable output voltage and a rated voltage, to obtain a third association relationship that the output voltage of the inverter is negatively correlated with the apparent power of the inverter — S1005

The inverter controls the output current of the inverter based on the third association relationship and the rated voltage, so that the inverter operates stably, and the output voltage of the inverter meets a preset range of the rated voltage — S1006

Switching instruction — S1009

Switch to a voltage source mode — S1010

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 106058910 A